# EUROPEAN PATENT APPLICATION

(11) **EP 3 862 963 A1**
(43) Date of publication of application: **11.08.2021**
(21) Application number: 19869084.4
(22) Date of filing: 25.07.2019
(51) Int. Cl.: G06Q 50/10, G06F 40/40, G10L 15/00

(54) **INTERPRETATION SYSTEM, SERVER DEVICE, DISTRIBUTION METHOD, AND RECORDING MEDIUM**

(30) Priority: 05.10.2018 JP 2018190131
(71) Applicant: Abelon Inc., Shinjuku-ku Tokyo 162-0062 (JP)
(72) Inventor: SHIN, Jungbum, Tokyo 162-0062 (JP)
(74) Representative: Betten & Resch
(86) International application number: PCT/JP2019/029236
(87) International publication number: WO 2020/070959

(57) **Abstract**

In order to solve a conventional problem that there is no interpretation system realized by a server apparatus and one or more terminal apparatuses, and configured to distribute, to one or more users, one or more pieces of interpreted speech obtained from speech of one speaker through interpretation performed by one or more interpreters, wherein the server apparatus properly manages information regarding languages of one or more interpreters, a server apparatus includes an interpreter information group storage unit in which an interpreter information group, which is a group of one or more pieces of interpreter information, is stored, the information being information regarding an interpreter who interprets speech in a first language to a second language, and having a first language identifier for identifying the first language, a second language identifier for identifying the second language, and an interpreter identifier for identifying the interpreter. Accordingly, it is possible to properly manage information regarding languages of one or more interpreters.

## Description

### Technical Field

The present invention relates to an interpretation system and the like realized by a server apparatus and one or more terminal apparatuses.

### Background Art

Conventionally, there are documents regarding interpretation systems enabling a user to choose an interpreter not only by language but also by the field of expertise and the like in interpretation (see Patent Document 1, for example). This conventional interpretation system includes multiple mobile communication terminals and an interpretation management device. The interpretation management device performs processing for causing a conversation between a first user who uses a first mobile communication terminal and a second user who uses a second mobile communication terminal to be interpreted by an interpreter using a common language of the users. Specifically, the interpretation management device includes a storage unit in which an interpreter list is stored, the list dividing multiple interpreters by languages and fields of specialty, an interpreter extracting unit that extracts an interpreter who matches a language and a field of specialty chosen by the first user using the first mobile terminal, from the storage unit, and a communication establishing unit that establishes communication with a mobile communication terminal of the extracted interpreter.

### Citation List

### Patent Document

Patent Document 1: JP 2017-143322A

### Summary of Invention

### Technical Problem

However, the above-described conventional interpretation system causes one interpreter to interpret a conversation between two users, that is, the system is not for causing one or more interpreters to interpret speech of one speaker and distributing the one or more pieces of interpreted speech to one or more users. In the above-described conventional interpretation system, how the interpretation management device manages languages of multiple interpreters is not clear, but it is not always possible to properly manage information regarding languages of one or more interpreters in the case in which the interpretation management device is used for an interpretation system for distributing, to one or more users, one or more pieces of interpreted speech obtained from speech of one speaker through interpretation performed by one or more interpreters.

Furthermore, there is no interpretation system realized by a server apparatus and one or more terminal apparatuses, and configured to distribute, to one or more users, one or more pieces of interpreted speech obtained from speech of one speaker through interpretation performed by one or more interpreters, wherein the server apparatus properly manages information regarding languages of one or more interpreters.

Furthermore, conventionally, there is no server apparatus for displaying a screen containing a video obtained by capturing an image at a venue and two or more interpreter images, on terminals of the two or more interpreters.

### Solution to Problem

A first aspect of the present invention is directed to an interpretation system realized by a server apparatus and one or at least two terminal apparatuses, wherein the server apparatus includes: an interpreter information group storage unit in which an interpreter information group, which is a group of one or more pieces of interpreter information, is stored, the information being information regarding an interpreter who interprets speech in a first language to a second language, and having a first language identifier for identifying the first language, a second language identifier for identifying the second language, and an interpreter identifier for identifying the interpreter; a user information group storage unit in which a user information group, which is a group of one or more pieces of user information, is stored, the information being information regarding a user of each of the one or more terminal apparatuses, and having a user identifier for identifying the user and a second language identifier for identifying a language used by the user for listening or reading; a second language speech acquiring unit that acquires one or more pieces of second language speech, which are data of speech obtained from speech in a first language spoken by one speaker, through interpretation performed by one or more interpreters respectively to second languages; and a distributing unit that distributes, to each of the one or more terminal apparatuses, second language speech corresponding to the second language identifier contained in the user information corresponding to the terminal apparatus, out of the one or more pieces of second language speech acquired by the second language speech acquiring unit, using the user information group, and the one or more terminal apparatuses each include: a terminal receiving unit that receives second language speech distributed from the server apparatus; and a reproducing unit that reproduces the second language speech received by the terminal receiving unit.

With this configuration, it is possible to provide an interpretation system realized by a server apparatus and one or more terminal apparatuses, and configured to distribute, to one or more users, one or more pieces of interpreted speech obtained from speech of one speaker through interpretation performed by one or more interpreters, wherein the server apparatus properly manages information regarding languages of one or more interpreters. As a result, it is possible to provide various interpretation services using one or more interpreters. For example, it is possible to distribute, to each of one or more terminal apparatuses, speech interpreted by an interpreter corresponding to a language used for listening or reading by the user of the terminal apparatus in a seminar in which one speaker speaks, and to distribute, to two or more terminal apparatuses, pieces of speech interpreted by one or more interpreters corresponding to languages used for listening or reading by the users of the terminal apparatuses in an international conference in which two or more speakers have a debate.

Furthermore, a second aspect of the present invention is directed to the interpretation system according to the first aspect, wherein the server apparatus further includes a second language text acquiring unit that acquires one or more pieces of second language text, which are data of text respectively obtained through speech recognition of the one or more pieces of second language speech acquired by the second language speech acquiring unit, the distributing unit distributes, to the one or more terminal apparatuses, the one or more pieces of second language text acquired by the second language text acquiring unit, the terminal receiving units also receive the one or more pieces of second language text distributed from the server apparatus, and the reproducing units also output the one or more pieces of second language text.

With this configuration, it is possible to distribute not only pieces of speech interpreted by one or more interpreters, but also one or more pieces of text respectively obtained through speech recognition of the pieces of speech.

Furthermore, a third aspect of the present invention is directed to the interpretation system according to the first or second aspect, wherein, when resuming reproduction of second language speech after an interruption, the reproducing unit performs chasing-reproduction of an un-reproduced portion in the second language speech, in fast-forward.

With this configuration, even when reproduction of speech interpreted by an interpreter is breaking up on the one or more terminal apparatuses, the users can listen to the un-reproduced portion without omission so as to make up for the delay.

Furthermore, a fourth aspect of the present invention is directed to the interpretation system according to the third aspect, wherein the reproducing unit performs chasing-reproduction of an un-reproduced portion in fast-forward at a speed corresponding to one or more of a delay time of the un-reproduced portion and a data size of the un-reproduced portion.

With this configuration, it is easy to make up for the delay in fast-forward at a proper speed.

Furthermore, a fifth aspect of the present invention is directed to the interpretation system according to the third or fourth aspect, wherein the reproducing unit starts chasing-reproduction of an un-reproduced portion in response to a data size of the un-reproduced portion exceeding a predetermined threshold or reaching the threshold.

With this configuration, it is possible to make up for the delay while preventing the reproduction from being breaking up again.

Furthermore, a sixth aspect of the present invention is directed to the interpretation system according to any one of the first to fifth aspects, wherein the server apparatus further includes: a first language text acquiring unit that acquires first language text, which is data of text obtained through speech recognition of speech in the first language spoken by one speaker; and a translation result acquiring unit that acquires one or more translation results containing one or more pieces of data among translated text obtained through translation performed using a translation engine from the first language text to the second language and translation speech obtained through conversion from the translated text into speech, the distributing unit further distributes, to each of the one or more terminal apparatuses, a translation result corresponding to the second language identifier contained in the user information corresponding to the terminal apparatus, out of the one or more translation results acquired by the translation result acquiring unit, using the user information group, the terminal receiving unit also receives the translation result distributed from the server apparatus, and the reproducing unit also outputs the translation result.

With this configuration, it is also possible for the users to use a translation result obtained by a translation engine.

In the sixth aspect, it is also possible that the server apparatus further includes a speaker information group storage unit 111 in which one or more pieces of speaker information are stored, the speaker information having a speaker identifier for identifying a speaker and a first language identifier for identifying a first language in which the speaker speaks, wherein the first language text acquiring unit acquires first language text corresponding to each of the one or more speakers, using the speaker information group.

Furthermore, a seventh aspect of the present invention is directed to the interpretation system according to the sixth aspect, wherein the translation result acquiring unit acquires only one or more translation results corresponding to one or more second language identifiers that are different from the one or more second language identifiers contained in the interpreter information group, and does not acquire one or more translation results corresponding to one or more second language identifiers that are the same as any of the one or more second language identifiers contained in the interpreter information group, among the one or more second language identifiers contained in the user information group.

With this configuration, it is possible to efficiently perform only necessary translation.

Furthermore, an eighth aspect of the present invention is directed to the interpretation system according to any one of the second to seventh aspects, wherein the one or more terminal apparatuses each further include a terminal accepting unit that can accept an operation that chooses one or more data formats out of speech and text, and the reproducing unit reproduces one or more pieces of data corresponding to the chosen one or more data formats, out of second language speech corresponding to the second language identifier contained in the user information regarding the user of the terminal apparatus and second language text obtained through speech recognition of the second language speech.

With this configuration, it is possible for each user to use one or more of speech and text of a translator corresponding to his or her language.

Furthermore, a ninth aspect of the present invention is directed to the interpretation system according to the eighth aspect, wherein the terminal receiving unit receives not only the second language text, but also second language text in a sub second language, which is another language, and the reproducing unit outputs the second language text and the second language text in the sub second language received by the terminal receiving unit.

With this configuration, it is possible for each user to also use text of an interpreter who is not an interpreter corresponding to his or her language.

In the eighth aspect, it is also possible that, in the case in which at least text is chosen as the data format, the terminal accepting unit can also accept an operation that further chooses a sub second language identifier group, which is a group of one or more second language identifiers that are different from a main second language identifier that is a second language identifier contained in the user information regarding the user of the terminal apparatus, out of the two or more second language identifiers contained in the translator information group, and, in the case in which a sub second language identifier group is chosen, the terminal receiving unit can also receive one or more pieces of second language text corresponding to the sub second language identifier group from the server apparatus, and the reproducing unit can output the one or more pieces of second language text corresponding to the sub second language identifier group, together with the second language text corresponding to the main second language identifier.

Furthermore, a tenth aspect of the present invention is directed to the interpretation system according to any one of the first to ninth aspects, wherein one or more interpreter information groups and one or more user information groups are respectively stored in the interpreter information group storage unit and the user information group storage unit in association with a venue identifier for identifying a venue, the user information further has a venue identifier, and the second language speech acquiring unit and the distributing unit acquire and distribute one or more pieces of second language speech for each of two or more venue identifiers.

With this configuration, it is possible to acquire and distribute one or more pieces of second language speech for each of two or more venues.

Furthermore, an eleventh aspect of the present invention is directed to the interpretation system according to any one of the first to tenth aspects, wherein the server apparatus further includes: a first language speech acquiring unit that acquires first language speech, which is data of speech in the first language spoken by one speaker; a speech feature value correspondence information acquiring unit that acquires speech feature value correspondence information indicating a correspondence between feature values of first language speech and second language speech, using the first language speech acquired by the first language speech acquiring unit and the one or more pieces of second language speech acquired by the second language speech acquiring unit, for each of one or more pieces of language information, which are each a pair of a first language identifier and a second language identifier; and a learning module configuring unit that configures a learning module in which the first language speech is taken as input and the second language speech is taken as output, for each of the one or more pieces of language information, using the speech feature value correspondence information.

With this configuration, it is possible to interpret a first language to one or more second languages using a learning module.

Furthermore, a twelfth aspect of the present invention is directed to the interpretation system according to the eleventh aspect, wherein the server apparatus further includes a reaction acquiring unit that acquires reaction information, which is information regarding a reaction from the user to the second language speech reproduced by the reproducing unit, and the learning module configuring unit configures a learning module, using speech feature value correspondence information acquired from two or more pairs of first language speech and second language speech selected using the reaction information.

With this configuration, it is possible to select the speech feature value correspondence information using a reaction from the user, thereby configuring a precise learning module.

Furthermore, a thirteenth aspect of the present invention is directed to the interpretation system according to the eleventh aspect, wherein the server apparatus further includes: a reaction acquiring unit that acquires reaction information, which is information regarding a reaction from the user to the second language speech reproduced by the reproducing unit; and an evaluation acquiring unit that acquires, for each of one or more interpreters, evaluation information regarding an evaluation of the interpreter, using the reaction information corresponding to the interpreter.

With this configuration, it is possible to evaluate one or more interpreters using a reaction from the user.

A fourteenth aspect of the present invention is directed to a server apparatus including: an interpreter information group storage unit in which an interpreter information group having two or more pieces of interpreter information is stored, the information containing an interpreter image, which is an image of an interpreter; a video accepting unit that accepts a video obtained by capturing an image at a venue; a screen information configuring unit that configures screen information for configuring a screen containing the video accepted by the video accepting unit and two or more interpreter images; and a screen information transmitting unit that transmits the screen information configured by the screen information configuring unit to second terminal apparatuses of two or more interpreters.

In the above-described configuration, all pieces of interpreter information contained in the interpreter information group do not have to contain an interpreter image.

With this configuration, it is possible to provide a mechanism for displaying a screen containing a video obtained by capturing an image at a venue and two or more interpreter images, on terminals of the two or more interpreters.

Furthermore, a fifteenth aspect of the present invention is directed to the server apparatus according to the fourteenth aspect, wherein the screen information configuring unit configures a screen containing two or more interpreter images with a clarity that is low enough to satisfy a predetermined condition.

With this configuration, it is possible to display a screen on which each interpreter can be identified but the details thereof (e.g., the interpreter is wearing makeup, etc.) cannot be seen.

Furthermore, a sixteenth aspect of the present invention is directed to the server apparatus according to the fourteenth or fifteenth aspect, wherein the interpreter information has an interpreter identifier, one or more pieces of interpreter information among the two or more pieces of interpreter information have state information for specifying an interpreter who is currently performing interpretation or an interpreter who is not currently performing interpretation, and the screen information configuring unit configures a screen containing the video accepted by the video accepting unit and the two or more interpreter images such that an interpreter image of an interpreter who is currently performing interpretation and an interpreter image of an interpreter who is not currently performing interpretation can be visually distinguished from each other, using the state information.

With this configuration, it is possible to display a screen on which, among two or more interpreters, which interpreter is performing interpretation can be seen.

Furthermore, a seventeenth aspect of the present invention is directed to the server apparatus according to the sixteenth aspect, wherein the interpreter information has state information indicating any one of at least three states consisting of a state of being currently performing interpretation, a state of being ready to perform interpretation, and a state of not being ready to perform interpretation, and the screen information configuring unit configures a screen containing the video accepted by the video accepting unit and the two or more interpreter images such that states of interpreters can be visually distinguished from each other, using the state information.

With this configuration, it is possible to display a screen on which, among two or more interpreters, which interpreter is performing interpretation and which interpreter performs interpretation next can be seen.

Furthermore, an eighteenth aspect of the present invention is directed to the server apparatus according to any one of the fourteenth to seventeenth aspects, further including: a chat receiving unit that receives chat information from a terminal apparatus or a second terminal apparatus, wherein the screen information configuring unit configures screen information of a screen containing one or more of a first chat region for having a chat with the terminal apparatus of a user and a second chat region for having a chat with the second terminal apparatus of a staff member, the screen being a screen on which the chat information received by the chat receiving unit is displayed in the chat regions.

With this configuration, it is possible to display a screen on which an interpreter can have a chat with one or more of a user and a staff member.

Furthermore, a nineteenth aspect of the present invention is directed to the server apparatus according to the eighteenth aspect, wherein the interpreter information has two or more language identifiers for identifying two or more interpretable languages, and the screen information configuring unit configures screen information of a screen having two or more first chat regions, which are chat regions respectively corresponding to the two or more language identifiers.

With this configuration, it is possible to display a screen on which an interpreter can have a chat with users in two or more languages.

Furthermore, a twentieth aspect of the present invention is directed to the server apparatus according to any one of the fourteenth to nineteenth aspects, wherein the screen information configuring unit configures screen information such that an operation region, which is a region of one or more operable objects that accept an operation of an interpreter is positioned in a lower portion of the screen, and the video accepted by the video accepting unit is positioned in an upper portion of the screen.

With this configuration, it is possible to display a screen that can be viewed and operated with ease.

Furthermore, a twenty-first aspect of the present invention is directed to the server apparatus according to the twentieth aspect, wherein the screen information configuring unit configures screen information such that two mute buttons for muting speech interpreted by an interpreter are respectively positioned on a lower left side of the screen and a lower right side of the screen.

With this configuration, it is possible to display a screen on which speech can be muted with ease regardless of whether the interpreter is right-handed or left-handed.

Furthermore, a twenty-second aspect of the present invention is directed to the server apparatus according to any one of the fourteenth to twenty-first aspects, wherein the interpreter information has volume information for specifying volumes set by an interpreter and respectively corresponding to two or more languages, in association with language identifiers, and speech in a language identified by each of the language identifiers is input in a volume specified with the volume information that is paired with the language identifier, to the second terminal apparatus of the interpreter.

With this configuration, it is possible to display a screen on which an interpreter can set a volume for each of two or more languages.

Furthermore, a twenty-third aspect of the present invention is directed to the server apparatus according to any one of the fourteenth to twenty-second aspects, wherein the screen information configuring unit configures screen information having two or more types of user interface components corresponding to language identifiers, and in a case in which an instruction to determine a language identifier is accepted from the second terminal apparatus for any of the two or more types of user interface components, the screen of the second terminal apparatus is changed such that a current language of all of the two or more types of user interface components is a language identified with the language identifier corresponding to the instruction.

With this configuration, it is possible to display a screen on which, in response to an instruction to determine a language identifier for any of the two or more types of user interface components, a current language of all of the two or more types of user interface components is changed.

Furthermore, a twenty-fourth aspect of the present invention is directed to the server apparatus according to the twenty-third aspect, wherein the two or more types of user interface components are a user interface component for a volume operation and a user interface component for a display region of text for interpretation or of an interpretation result.

With this configuration, it is possible to display a screen on which, in response to an instruction to determine a language identifier for a user interface component for either a volume operation or text display, the current language is changed for user interface components for both a volume operation and text display.

### Advantageous Effects of Invention

With the interpretation system according to the present invention, it is possible to provide an interpretation system realized by a server apparatus and two or more terminal apparatuses, and configured to distribute, to two or more users, one or more pieces of interpreted speech obtained from speech of one speaker through interpretation performed by one or more interpreters, wherein the server apparatus properly manages information regarding languages of one or more interpreters.

Furthermore, according to the present invention, it is possible to provide a server apparatus that displays a screen containing a video obtained by capturing an image at a venue and two or more interpreter images, on terminals of the two or more interpreters.

### Brief Description of Drawings

FIG. 1 is a block diagram of an interpretation system in Embodiment 1.
FIG. 2 is a flowchart illustrating an operation example of a server apparatus in the embodiment.
FIG. 3 is a flowchart illustrating an operation example of the server apparatus in the embodiment.
FIG. 4 is a flowchart illustrating an operation example of a terminal apparatus in the embodiment.
FIG. 5 is a data structure diagram of speaker information in the embodiment.
FIG. 6 is a data structure diagram of interpreter information in the embodiment.
FIG. 7 is a data structure diagram of user information in the embodiment.
FIG. 8 is a block diagram of an interpretation system in Embodiment 2.
FIG. 9 is a block diagram of a server apparatus in the embodiment.
FIG. 10 is a flowchart illustrating an operation example of the server apparatus in the embodiment.
FIG. 11 is a flowchart illustrating an operation example of a second terminal apparatus in the embodiment.
FIG. 12 is a data structure diagram of interpreter information in the embodiment.
FIG. 13 is a diagram showing an output example of screen information.
FIG. 14 is an external view of a computer system.
FIG. 15 is a diagram showing an example of the internal configuration of the computer system.

### Description of Embodiment

Hereinafter, two embodiments of an interpretation system and the like will be described with reference to the drawings. It should be noted that constituent elements denoted by the same reference numerals in the embodiments perform similar operations, and thus a description thereof may not be repeated.

In Embodiment 1, a description will be provided of an interpretation system realized by a server apparatus and one or more terminal apparatuses, and configured to distribute, to one or more users, one or more pieces of interpreted speech obtained from speech of one speaker through interpretation performed by one or more interpreters, wherein the server apparatus properly manages information regarding languages of one or more interpreters.

In Embodiment 2, a description will be provided of the interpretation system in Embodiment 1, wherein the server apparatus displays a screen containing a video obtained by capturing an image at a venue and two or more interpreter images, on terminals of the two or more interpreters.

### Embodiment 1

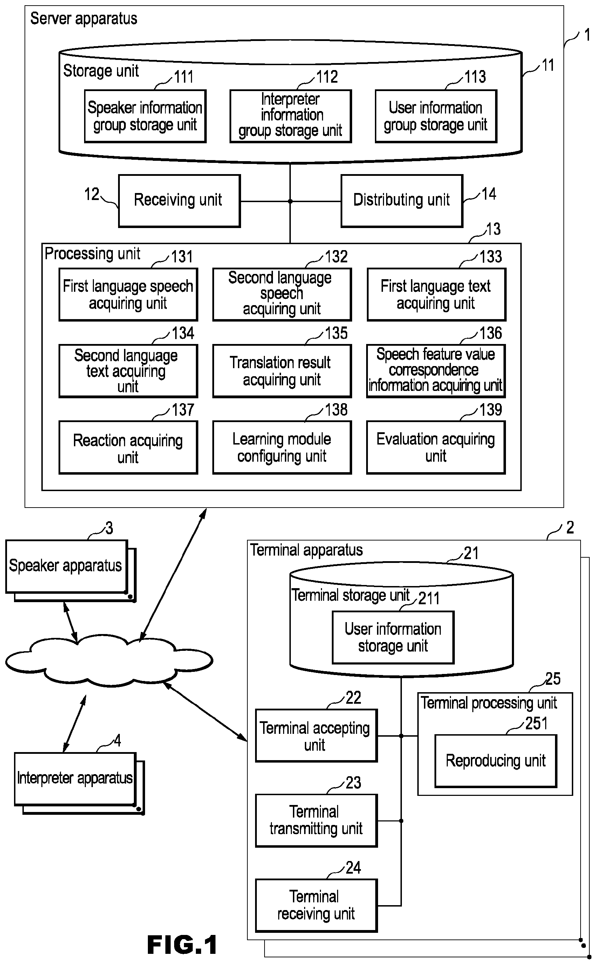

FIG. 1 is a block diagram of an interpretation system in this embodiment. The interpretation system includes a server apparatus 1 and two or more terminal apparatuses 2. For example, the server apparatus 1 is communicably connected to each of the two or more terminal apparatuses 2 via a network such as an LAN or the Internet, a wireless or wired communication line, or the like. The number of terminal apparatuses 2 constituting the interpretation system is two or more in this embodiment, but the number may be one.

For example, the server apparatus 1 is a server of an operating company that operates the interpretation system, but may also be a cloud server, an ASP server, or the like, and there is no limitation on the type or location thereof.

For example, the terminal apparatuses 2 are mobile terminals of users who use the interpretation system. The mobile terminals are portable terminals, and examples thereof include a smartphone, a tablet device, a mobile phone, and a laptop PC, but there is no limitation on the type thereof. It is also possible that the terminal apparatuses 2 are desktop terminals, and there is no limitation on the type thereof.

The interpretation system typically includes one or at least two speaker apparatuses 3 and one or at least two interpreter apparatuses 4 as well. The speaker apparatuses 3 are terminal apparatuses of speakers who speak in a seminar, a debate, or the like. For example, the speaker apparatuses 3 are desktop terminals, but they may be mobile terminals or microphones, and there is no limitation on the type thereof. The interpreter apparatuses 4 are terminal apparatuses of interpreters who interpret speech of a speaker. The interpreter apparatuses 4 are also desktop terminals, for example, but they may be mobile terminals or microphones, and there is no limitation on the type thereof. The terminals that realize the speaker apparatuses 3 and the like are communicably connected to the server apparatus 1 via a network or the like. The microphones that realize the speaker apparatuses 3 and the like are connected to the server apparatus 1 in a wired or wireless manner, for example, but they may be communicably connected to the server apparatus 1 via a network or the like.

The server apparatus 1 includes a storage unit 11, a receiving unit 12, a processing unit 13, and a distributing unit 14. The storage unit 11 includes a speaker information group storage unit 111, an interpreter information group storage unit 112, and a user information group storage unit 113. The processing unit 13 includes a first language speech acquiring unit 131, a second language speech acquiring unit 132, a first language text acquiring unit 133, a second language text acquiring unit 134, a translation result acquiring unit 135, a speech feature value correspondence information acquiring unit 136, a reaction acquiring unit 137, a learning module configuring unit 138, and an evaluation acquiring unit 139.

The terminal apparatuses 2 each include a terminal storage unit 21, a terminal accepting unit 22, a terminal transmitting unit 23, a terminal receiving unit 24, and a terminal processing unit 25. The terminal storage unit 21 includes a user information storage unit 211. The terminal processing unit 25 includes a reproducing unit 251.

Various types of information may be stored in the storage unit 11 constituting the server apparatus 1. The various types of information are, for example, a later-described speaker information group, a later-described interpreter information group, a later-described user information group, or the like.

Furthermore, a result of processing performed by the processing unit 13 is also stored in the storage unit 11. The result of processing performed by the processing unit 13 is, for example, first language speech acquired by the first language speech acquiring unit 131, second language speech acquired by the second language speech acquiring unit 132, first language text acquired by the first language text acquiring unit 133, second language text acquired by the second language text acquiring unit 134, a translation result acquired by the translation result acquiring unit 135, speech feature value correspondence information acquired by the speech feature value correspondence information acquiring unit 136, reaction information acquired by the reaction acquiring unit 137, a learning module configured by the learning module configuring unit 138, an evaluation value acquired by the evaluation acquiring unit 139, or the like. These types of information will be described later.

A speaker information group is stored in the speaker information group storage unit 111. The speaker information group is a group of one or more pieces of speaker information. The speaker information is information regarding a speaker. The speaker is a person who speaks. The speaker is, for example, a lecturer who gives a lecture at a seminar, a debater who has a debate at a debate, or the like, but there is no limitation on the speaker.

The speaker information has, for example, a speaker identifier and a first language identifier. The speaker identifier is information for identifying a speaker. The speaker identifier is, for example, a name, an e-mail address, a mobile phone number, an ID, or the like, but may also be a terminal identifier (e.g., a MAC address, an IP address, etc.) for identifying a mobile terminal of a speaker, and any information is possible as long as a speaker can be identified. The speaker identifier is not absolutely necessary. For example, if the number of speakers is only one, the speaker information does not have to have a speaker identifier.

The first language identifier is information for identifying a first language. The first language is a language in which a speaker speaks. The first language is, for example, Japanese, but there is no limitation on the language, and examples thereof include English, Chinese, and French. The first language identifier is, for example, a language name such as "Japanese" or "English", but may also be an abbreviation such as "jpn" or "eng", or an ID, and any information is possible as long as a first language can be identified.

One or at least two speaker information groups may be stored in the speaker information group storage unit 111, for example, in association with a venue identifier. The venue identifier is information for identifying a venue. The venue is a place at which a speaker speaks. The venue is, for example, a conference hall, a class room, a hall, or the like, but there is no limitation on the type or location thereof. The venue identifier is, for example, a venue name, an ID, or the like, and any information is possible as long as a venue can be identified.

The speaker information group is not absolutely necessary, and the server apparatus 1 does not have to include the speaker information group storage unit 111.

An interpreter information group is stored in the interpreter information group storage unit 112. The interpreter information group is a group of one or more pieces of interpreter information. The interpreter information is information regarding an interpreter. The interpreter is a person who performs interpretation. The interpretation is an act of interpreting speech in one language to another language while listening to the speech. The interpretation is, for example, simultaneous interpretation, but may also be consecutive interpretation. The simultaneous interpretation is an act of performing interpretation almost simultaneously with listening to speech of a speaker. The consecutive interpretation is an act of sequentially performing interpretation while breaking up speech of a speaker to portions with an appropriate length.

The interpreter interprets speech in a first language to a second language. The second language is a language used by the user for listening or reading. The second language may be any language as long as it is different from the first language. For example, if the first language is Japanese, the second language is English, Chinese, French, or the like.

Specifically, for example, a case is conceivable in which Japanese in which a lecturer α speaks at a venue X is interpreted by an interpreter A to English, by an interpreter B to Chinese, and by an interpreter C to French, respectively. It is also possible that there are two or more interpreters who perform the same type of interpretation. For example, it is also possible that two interpreters A1 and A2 perform interpretation from Japanese to English, and the server apparatus 1 distributes speech interpreted by one of the interpreters A1 and A2 and text obtained from interpretation by the other of the interpreters A1 and A2, to the two or more terminal apparatuses 2.

Furthermore, a case is also conceivable in which Japanese in which a debater β speaks at another venue Y is interpreted by interpreters E and F respectively to English and Chinese, and English in which a debater γ speaks at the same venue is interpreted by interpreters E and G respectively to Japanese and Chinese. In this example, one interpreter E performs bidirectional interpretation between Japanese and English and between English and Japanese, but it is also possible that the interpreter E performs interpretation either between Japanese and English or between English and Japanese, and the other interpretation is performed by another interpreter H.

The interpreters typically perform interpretation at a venue at which a speaker speaks, but they may perform interpretation at another place, and there is no limitation on the location thereof. The other place is, for example, a room of an operating company or interpreter's home, and any place is possible. If interpretation is performed at another place, speech of a speaker is transmitted from the speaker apparatuses 3 via a network or the like to the interpreter apparatuses 4.

The interpreter information has, for example, a first language identifier, a second language identifier, and an interpreter identifier. The second language identifier is information for identifying the above-described second language. The second language identifier is, for example, a language name, an abbreviation, an ID, or the like, and any type of identifier is possible. The interpreter identifier is information for identifying an interpreter. The interpreter identifier is, for example, a name, an e-mail address, a mobile phone number, an ID, a terminal identifier, or the like, and any type of identifier is possible.

Furthermore, it can be said that the interpreter information is constituted by interpreter language information and an interpreter identifier. The interpreter language information is information regarding a language of an interpreter, and the interpreter language information has, for example, a first language identifier, a second language identifier, and an evaluation value. The evaluation value is a value indicating an evaluation regarding the quality of interpretation performed by an interpreter. The quality is, for example, how easily the interpretation is understandable, how small the number of misinterpretations is, and the like. The evaluation value is acquired, for example, based on a reaction from a user who listened to speech interpreted by an interpreter. The evaluation value is, for example, a numerical value such as "5", "4", or "3", but may also be a text character such as "A", "B", or "C", and there is no limitation on the expression form.

It is also possible that, for example, one or at least two interpreter information groups are stored in the interpreter information group storage unit 112 in association with a venue identifier.

A user information group is stored in the user information group storage unit 113. The user information group is a group of one or at least two pieces of user information. The user information is information regarding a user. The user is a user of the interpretation system as described above. The user can listen to interpreted speech, which is speech obtained by interpreting speech of a speaker, via the terminal apparatus 2. The user can also read interpretation text, which is text obtained through speech recognition of the interpreted speech.

The user typically listens to interpreted speech at a venue at which a speaker is present, but he or she may listen to the interpreted speech at another place, and there is no limitation on the location thereof. The other place is, for example, user's home or a train, and any place is possible.

The user information has a user identifier and a second language identifier. The user identifier is information for identifying a user. The user identifier is, for example, a name, an e-mail address, a mobile phone number, an ID, a terminal identifier, or the like, and any type of identifier is possible.

The second language identifier contained in the user information is information for identifying a language used by the user for listening or reading. The second language identifier contained in the user information is information based on user's choice, and is typically information that can be changed, but may also be fixed information.

Furthermore, it can be said that the user information is constituted by user language information and a user identifier. The user language information is information regarding a language of a user. The user language information has, for example, a main second language identifier, a sub second language identifier group, and data format information, and the like. The main second language identifier is information for identifying a primary second language (hereinafter, referred to as a "main second language"). The sub second language identifier group is a group of one or at least two sub second language identifiers. The sub second language identifier is information for identifying a secondary second language (hereinafter, referred to as a "sub second language") that can be chosen in addition to the primary second language.

For example, if the main second language is French, the sub second language may be English or Chinese, and there is no limitation on the sub second language as long as it is different from the main second language.

The data format information is information regarding a data format of the second language. The data format information typically indicates a data format of the main second language. The data format of the main second language is speech or text, and the data format information may contain one or more data formats out of "speech" and "text". That is to say, the main second language may be speech, text, or both of speech and text.

In this embodiment, the data format information is, for example, information based on user's choice, and can be changed. As for the main second language, the user may listen to speech, read text, or read text while listening to speech.

Meanwhile, in this embodiment, it is assumed that the data format of the sub second language is text, and cannot be changed. That is to say, for example, the user can read text in the sub second language in addition to text in the main second language.

One or at least two pieces of user information group may be stored in the user information group storage unit 113, for example, in association with a venue identifier.

The receiving unit 12 receives various types of information. The various types of information are, for example, various types of information accepted by a later-described terminal accepting unit 22 of the terminal apparatus 2, or the like.

The processing unit 13 performs various types of processing. The various types of processing are, for example, processing performed by the first language speech acquiring unit 131, the second language speech acquiring unit 132, the first language text acquiring unit 133, the second language text acquiring unit 134, the translation result acquiring unit 135, the speech feature value correspondence information acquiring unit 136, the reaction acquiring unit 137, the learning module configuring unit 138, and the evaluation acquiring unit 139, and the like.

Furthermore, the processing unit 13 also performs various types of determination illustrated in the flowchart. Furthermore, the processing unit 13 also performs processing that accumulates information acquired by each of the first language speech acquiring unit 131, the second language speech acquiring unit 132, the first language text acquiring unit 133, the second language text acquiring unit 134, the translation result acquiring unit 135, the speech feature value correspondence information acquiring unit 136, the reaction acquiring unit 137, and the evaluation acquiring unit 139, in the storage unit 11, in association with time information.

The time information is information indicating the time. The time information is typically information indicating the current time. It is also possible that the time information is information indicating a relative time. The relative time is a time relative to a point in time serving as a reference, such as elapsed time from the start of a seminar or the like. If information such as first language speech is acquired, the processing unit 13 acquires time information indicating the current time from a built-in clock of an MPU, an NTP server, or the like, and accumulates the information acquired by the first language speech acquiring unit 131 or the like, in the storage unit 11, in association with the time information. The information acquired by the first language speech acquiring unit 131 or the like may contain time information, and, in that case, the processing unit 13 does not have to associate the acquired information with the time information.

The first language speech acquiring unit 131 acquires first language speech. The first language speech is data of speech in the first language spoken by one speaker. The one speaker may be a single speaker (e.g., a lecturer who delivers speech in a seminar), or a currently speaking speaker among two or more speakers (e.g., two or more debaters who hold a discussion at a debate). The acquiring is typically receiving the first language speech.

That is to say, for example, the first language speech acquiring unit 131 receives one or more pieces of first language speech transmitted from one or more speaker apparatuses 3. For example, a microphone is provided at or near the mouth of a lecturer, and the first language speech acquiring unit 131 acquires first language speech via this microphone.

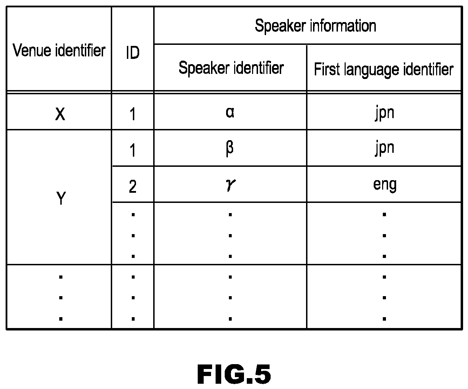

The first language speech acquiring unit 131 may acquire one or more pieces of first language speech from one or more speaker apparatuses 3, using the speaker information group. For example, if a venue at which speakers speak is a studio at which there is no user, the receiving unit 12 receives speaker identifiers from the terminal apparatuses 2 of one or more users at home or the like. The first language speech acquiring unit 131 may transmit a request for first language speech, to the speaker apparatuses 3 of speakers identified with speaker identifiers received by the receiving unit 12, using one or more pieces of speaker information constituting a speaker information group (see FIG. 5, which will be described later), and receive first language speech transmitted from the speaker apparatuses 3 in response to the request.

The first language speech is not absolutely necessary, and the server apparatus 1 does not have to include the first language speech acquiring unit 131.

The second language speech acquiring unit 132 acquires one or more pieces of second language speech. The pieces of second language speech are data of speech obtained from speech in a first language spoken by one speaker, through interpretation performed by one or more interpreters respectively to second languages. As described above, the second languages are languages used by users for listening or reading, and may be any language as long as they are different from the first language.

It is preferable that the second languages are languages corresponding to any of the two or more language identifiers stored in the user information group storage unit 113, and are languages other than the one or more languages corresponding to the one or more second language identifiers stored in the interpreter information group storage unit 112. Alternatively, the second languages may be the same languages as any of the one or more languages corresponding to the one or more second language identifiers stored in the interpreter information group storage unit 112, as long as they are languages corresponding to any of the two or more language identifiers stored in the user information group storage unit 113.

For example, the second language speech acquiring unit 132 receives one or more pieces of second language speech transmitted from one or more interpreter apparatuses 4.

Furthermore, the second language speech acquiring unit 132 may acquire one or more pieces of second language speech from one or more interpreter apparatuses 4, using the interpreter information group. Specifically, the second language speech acquiring unit 132 acquires one or more interpreter identifiers using one or more pieces of interpreter information constituting the interpreter information group, and transmits a request for second language speech to the interpreter apparatuses 4 of the interpreters respectively identified with the acquired one or more interpreter identifiers. Then, the second language speech acquiring unit 132 receives pieces of second language speech transmitted from the interpreter apparatuses 4 in response to the request.

The first language text acquiring unit 133 acquires first language text. The first language text is data of text in a first language in which one speaker speaks. For example, the first language text acquiring unit 133 acquires first language text through speech recognition of the first language speech acquired by the first language speech acquiring unit 131. Alternatively, the first language text acquiring unit 133 may acquire first language speech through speech recognition of speech from a microphone of a speaker. Alternatively, the first language text acquiring unit 133 may acquire first language speech through speech recognition of speech from the terminal apparatuses 2 of one or more speakers, using the speaker information group.

The second language text acquiring unit 134 acquires one or more pieces of second language text. The pieces of second language text are data of text in second languages interpreted by one or more interpreters. For example, the second language text acquiring unit 134 acquires one or more pieces of second language text respectively obtained through speech recognition of the one or more pieces of second language speech acquired by the second language speech acquiring unit 132.

The translation result acquiring unit 135 acquires one or more translation results. The translation result is a result obtained through translation performed using a translation engine from the first language text. The translation performed using a translation engine is a known technique, and thus a description thereof has been omitted. The translation result contains one or more pieces of data among translated text and translation speech. The translated text is text obtained through translation from the first language text to the second language. The translation speech is speech obtained through conversion from the translated text into speech. The conversion into speech can be said to be speech synthesis.

For example, it is preferable that the translation result acquiring unit 135 acquires only one or more translation results corresponding to one or more second language identifiers that are different from the one or more second language identifiers contained in the interpreter information group, and does not acquire one or more translation results corresponding to one or more second language identifiers that are the same as any of the one or more second language identifiers contained in the interpreter information group, among the two or more second language identifiers contained in the user information group.

Specifically, for example, the translation result acquiring unit 135 determines, for each of the two or more second language identifiers contained in the user information group, whether or not the second language identifier is different from the one or more second language identifiers contained in the interpreter information group. Then, the translation result acquiring unit 135 acquires one or more second language identifiers that are different from the one or more second language identifiers contained in the interpreter information group, but does not acquire second language identifiers that are the same as any of the one or more second language identifiers contained in the interpreter information group.

The speech feature value correspondence information acquiring unit 136 acquires speech feature value correspondence information, using the first language speech acquired by the first language speech acquiring unit 131 and the one or more pieces of second language speech acquired by the second language speech acquiring unit 132, for each of the one or more pieces of language information. The speech feature value correspondence information is information indicating a correspondence between feature values in a pair of first language speech and second language speech.

The language information is information regarding a language. The language information is, for example, a pair of a first language identifier and a second language identifier (e.g., "jpn-eng", "jpn-chi", "jpn-fre", etc.), but there is no limitation on the data structure. The correspondence between first language speech and second language speech may be, for example, a correspondence in which an element is taken as a unit. The element is an element constituting a sentence. The element constituting a sentence is, for example, a morpheme. The morpheme is one or more elements constituting a sentence in a natural language. The morpheme is, for example, a word, but may also be a phrase or the like. Alternatively, an element may be a whole sentence, and any element is possible as long as it is an element of a sentence.

The feature value can be said to be, for example, information quantitatively indicating the feature of an element. The feature value is, for example, an array of phonemes constituting a morpheme (hereinafter, referred to as a "phoneme string"). Alternatively, the feature value may be the position of an accent in a phoneme string or the like.

For example, it is also possible that the speech feature value correspondence information acquiring unit 136 performs, for each of the two or more pieces of language information, morphological analysis on first language speech and second language speech, thereby specifying two morphemes that correspond to each other between the first language speech and the second language speech, and acquires feature values of the two morphemes. The morphological analysis is a known technique, and thus a description thereof has been omitted.

Furthermore, it is also possible that the speech feature value correspondence information acquiring unit 136 detects, for each of the two or more pieces of language information, one or more silence periods in first language speech and second language speech, and performs segmentation that divides speech into two or more segments at the one or more silence periods. The silence period is a period in which the state with a speech level of not greater than a threshold is maintained for a predetermined length of time or more. It is also possible that the speech feature value correspondence information acquiring unit 136 specifies two segments that correspond to each other between the first language speech and the second language speech, and acquires feature values of the two segments. For example, it is also possible that the numbers such as "1", "2", and "3" are allocated to the two or more segments of the first language speech, the numbers such as "1", "2", and "3" are allocated to the two or more segments of the second language speech as well, and each pair of two segments to which the same number is allocated is considered as segments that correspond to each other.

The reaction acquiring unit 137 acquires two or more pieces of reaction information. The reaction information is information regarding a reaction from the user to interpretation performed by an interpreter. The reaction information has, for example, a user identifier and a reaction type. The reaction type is information indicating the type of reaction. The reaction type is, for example, "nod", "tilt the neck", "laugh", or the like, but may also be "no reaction", and there is no limitation on the type of expression form.

The reaction information does not have to have a user identifier. That is to say, each user who reacted to interpretation performed by one interpreter does not have to be specified, and, for example, it is sufficient that a main second language of the user is specified. Accordingly, the reaction information may have, for example, a second language identifier instead of the user identifier. Furthermore, for example, if the number of interpreters is only one, it is possible that the reaction information is information merely indicating the reaction type.

If the number of interpreters is two or more, for example, the venue is divided into two or more second language partitions (e.g., an English partition, a Chinese partition, etc.) corresponding to the two or more interpreters. Then, the front side of each of the two or more language partitions is provided with a camera capable of capturing an image of faces of one or more users in the partition.

The reaction acquiring unit 137 receives an image from the camera of each of the two or more language partitions, and performs face detection from the image, thereby acquiring one or more face images of users in the partition. The face detection is a known technique, and thus a description thereof has been omitted. A group of pairs of a feature value of a face image and a reaction type (e.g., "nod", "tilt the neck", "laugh", etc.) is stored in the storage unit 11, and the reaction acquiring unit 137 acquires, for each of the one or more face images, a feature value from the face image, and specifies a reaction type corresponding to the feature value, thereby acquiring one or more pieces of reaction information regarding a visible reaction of each or a group of the one or more users in the partition.

Furthermore, the left and right sides in the venue may be provided with a pair of microphones capable of detecting a sound (e.g., clapping sound, laughter, etc.) that is generated in each of the two or more language partitions. A group of pairs of a feature value of a sound and a reaction type (e.g., "clap", "laugh", etc.) is stored in the storage unit 11, and the reaction acquiring unit 137 detects generation of a sound from the left and right sound from the pair of microphones, and specifies the position of the sound source. Then, it is possible to acquire, for each of the two or more language partitions, a feature value from sound of at least one of the left and right microphones, and specify a reaction type corresponding to the feature value, thereby acquiring one or more pieces of reaction information regarding an audible reaction of a group of the one or more users in the partition.

Furthermore, it is also possible that, for example, the reaction acquiring unit 137 acquires, for each of the two or more users, reaction information to second language speech reproduced by a later-described reproducing unit 251 of the terminal apparatus 2, using the user information group.

Specifically, for example, the processing unit 13 accepts in advance, from each of the two or more users, a face image of the user via the terminal apparatus 2 of the user, and accumulates a group of pairs of a user identifier and the face image in the storage unit 11. One or at least two cameras are installed at a venue, and the reaction acquiring unit 137 performs face recognition using camera images from the one or more cameras, thereby detecting face images of the two or more users. Next, the reaction acquiring unit 137 acquires, for each of the two or more user identifiers, reaction information using the two or more face images of the camera images. The processing unit 13 accumulates the reaction information acquired for each of the two or more user identifiers, in the storage unit 11, in association with time information.

Furthermore, it is also possible that the reaction acquiring unit 137 acquires, for each of the two or more users, face image of the user via a built-in camera of the terminal apparatus 2 of the user, and acquires reaction information using the face image.

The learning module configuring unit 138 configures a learning module in which the first language speech is taken as input and the second language speech is taken as output, using two or more pieces of speech feature value correspondence information, for each of the one or more pieces of language information. The learning module can be said to be information for outputting corresponding second language speech to input of first language speech, through machine learning of a correspondence between a feature value of the first language speech and a feature value of the second language speech, using two or more pieces of speech feature value correspondence information as teaching data. The machine learning is, for example, deep learning, a random forest, a decision tree, or the like but there is no limitation on the type thereof. Machine learning such as deep learning is a known technique, and thus a description thereof has been omitted.

The learning module configuring unit 138 configures a learning module, using speech feature value correspondence information acquired from two or more pairs of first language speech and second language speech selected using the reaction information.

Selecting can be said to be choosing a pair suitable to configure a learning module with a high level of precision, or discarding an unsuitable pair. Whether or not a pair is suitable is determined, for example, based on whether or not reaction information to second language speech satisfies a predetermined condition. The reaction information to second language speech is reaction information immediately after the second language speech. The predetermined condition may be, for example, "one or more of a clapping sound or a nodding motion are detected" or the like. The selecting can be realized by, for example, accumulating a suitable pair or second language speech constituting the suitable pair in the storage unit 11, or deleting an unsuitable pair or second language speech constituting the unsuitable pair from the storage unit 11. Alternatively, the selecting may be processing in which information regarding a suitable pair acquired by a unit is delivered to another unit, whereas information regarding unsuitable pair is discarded without being delivered.

The selecting may be performed by any unit of the server apparatus 1. For example, it is preferable that the selecting is performed by the speech feature value correspondence information acquiring unit 136, which is on the most upstream side in the processing. That is to say, for example, the speech feature value correspondence information acquiring unit 136 determines whether or not reaction information corresponding to second language speech constituting each of two or more pairs satisfies a predetermined condition, and acquires speech feature value correspondence information from the pair containing the second language speech corresponding to the reaction information determined as satisfying the condition. The second language speech corresponding to the reaction information determined as satisfying the condition is second language speech immediately before the reaction information.

It is also possible that the selecting is performed by the learning module configuring unit 138. Specifically, for example, the learning module configuring unit 138 may discard, for each of the one or more second language identifiers, speech feature value correspondence information satisfying a predetermined condition, among the two or more pieces of speech feature value correspondence information serving as teaching data, using the two or more pieces of reaction information acquired by the reaction acquiring unit 137.

The predetermined condition is, for example, a condition that the number or proportion of users who tilted their necks at the same time among two or more users listening to one piece of second language speech is at a threshold or more or is more than the threshold. The learning module configuring unit 138 discards, as speech feature value correspondence information satisfying this condition, speech feature value correspondence information corresponding to the second language speech and corresponding to the time, among the two or more pieces of speech feature value correspondence information serving as teaching data.

The evaluation acquiring unit 139 acquires, for each of one or more interpreters, evaluation information using two or more pieces of reaction information corresponding to the interpreter. The evaluation information is information regarding an evaluation of the interpreter performed by users. The evaluation information has, for example, an interpreter identifier and an evaluation value. The evaluation value is a value indicating an evaluation. The evaluation value is, for example, a numerical value such as 5, 4, or 3, but may also be expressed as a text character such as A, B, or C.

For example, the evaluation acquiring unit 139 acquires an evaluation value, using a function in which the reaction information is taken as a parameter. Specifically, for example, the evaluation acquiring unit 139 may acquire an evaluation value using a decreasing function in which the number of times that the neck is tilted is taken as a parameter. Alternatively, the evaluation acquiring unit 139 may acquire an evaluation value using an increasing function in which one or more of the number of times that a user nods and the number of times that a user laughs is taken as a parameter.

The distributing unit 14 distributes, to each of the two or more terminal apparatuses 2, second language speech corresponding to the main second language identifier contained in the user information corresponding to the terminal apparatus 2, out of the one or more pieces of second language speech acquired by the second language speech acquiring unit 132, using the user information group.

Furthermore, it is also possible that the distributing unit 14 distributes, to each of the two or more terminal apparatuses 2, second language text corresponding to the main second language identifier contained in the user information corresponding to the terminal apparatus 2, out of the one or more pieces of second language text acquired by the second language text acquiring unit 134, using the user information group.

Furthermore, it is also possible that the distributing unit 14 further distributes, to each of the two or more terminal apparatuses 2, a translation result corresponding to the main second language identifier contained in the user information corresponding to the terminal apparatus 2, out of the one or more translation results acquired by the translation result acquiring unit 135, using the user information group.

Specifically, for example, the distributing unit 14 acquires a user identifier, a main second language identifier, and data format information using one or more pieces of user information constituting a user information group, and transmits one or more pieces of information corresponding to the acquired data format information, out of speech and text in the main second language identified with the acquired main second language identifier, to the terminal apparatus 2 of the user identified with the acquired user identifier.

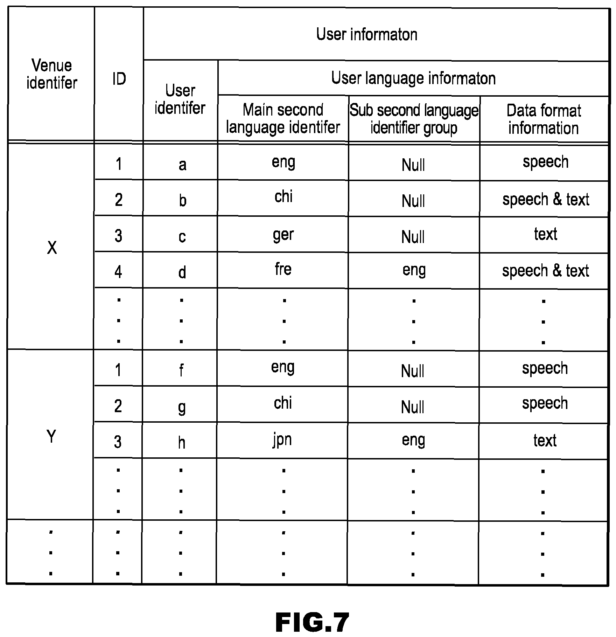

Accordingly, if a piece of user information (see a first piece of user information in FIG. 7, which will be described later, for example) has a user identifier "a", a main second language identifier "eng", and data format information "speech", speech in English identified with the main second language identifier "eng" is distributed to the terminal apparatus 2 of the user a identified with the user identifier "a".

Furthermore, if another piece of user information (e.g., a second piece of user information in FIG. 7) has a user identifier "b", a main second language identifier "chi", and data format information "speech & text", speech in Chinese identified with the main second language identifier "chi" is distributed together with text in Chinese to the terminal apparatus 2 of the user b identified with the user identifier "b".

Furthermore, if another piece of user information (e.g., a third piece of user information in FIG. 7) has a user identifier "c", a main second language identifier "ger", and data format information "text", translated text in German identified with the main second language identifier "ger" is distributed to the terminal apparatus 2 of the user c identified with the user identifier "c".

Moreover, it is also possible that the distributing unit 14 further distributes, to each of the two or more terminal apparatuses 2, one or more pieces of second language text corresponding to the sub second language identifier group contained in the user information corresponding to the terminal apparatus 2, out of the one or more pieces of second language text acquired by the second language text acquiring unit 134, using the user information group.

Specifically, if another piece of user information (e.g., a fourth piece of user information in FIG. 7) has a user identifier "d", a main second language identifier "fre", a sub language identifier group "eng", and data format information "speech & text", speech in French identified with the main second language identifier "fre" is distributed together with two types of text in French and English to the terminal apparatus 2 of the user d identified with the user identifier "d".

It is also possible that the distributing unit 14 distributes one or more of second language speech and second language text, for example, in a pair with the second language identifier. Alternatively, it is also possible that the distributing unit 14 distributes one or more of second language speech and second language text in a pair with the interpreter identifier and the second language identifier.

Furthermore, it is also possible that the distributing unit 14 distributes one or more of first language speech and first language text, for example, in a pair with the first language identifier. Alternatively, it is also possible that the distributing unit 14 distributes one or more of first language speech and first language text in a pair with the speaker identifier and the first language identifier.

Furthermore, it is also possible that the distributing unit 14 distributes one or more translation results, for example, in a pair with the second language identifier. Alternatively, it is also possible that the distributing unit 14 distributes one or more translation results in a pair with the second language identifier and information indicating that the results were obtained by a translation engine.

It is not absolutely necessary to distribute a language identifier such as a second language identifier, and it is sufficient that the distributing unit 14 distributes only one or more types of information of speech such as second language speech and text such as second language text.

Various types of information may be stored in the terminal storage unit 21 constituting each of the terminal apparatuses 2. The various types of information are, for example, user information. Various types of information received by a later-described terminal receiving unit 24 are also stored in the terminal storage unit 21.

User information regarding a user of the terminal apparatus 2 is stored in the user information storage unit 211. As described above, the user information has, for example, a user identifier and language information. The language information has a main second language identifier, a sub second language identifier group, and data format information.

It is not absolutely necessary that user information is stored in the terminal apparatus 2, and the terminal storage unit 21 does not have to include the user information storage unit 211.

For example, the terminal accepting unit 22 can accept various operations via an input device such as a touch panel or a keyboard. The various operations are, for example, an operation that chooses a main second language. The terminal accepting unit 22 accepts such an operation, and acquires a main second language identifier.

Furthermore, the terminal accepting unit 22 can further accept an operation that chooses one or more data formats out of speech and text for the main second language. The terminal accepting unit 22 accepts this operation, and acquires data format information.

Furthermore, in the case in which at least text is chosen as the data format, the terminal accepting unit 22 can also accept an operation that further chooses one or more second language identifiers that are different from the second language identifier contained in the user information regarding the user of the terminal apparatus 2, out of the two or more second language identifiers contained in the translator information group. The terminal accepting unit 22 accepts this operation, and acquires a sub second language identifier group.

The terminal transmitting unit 23 transmits the various types of information (e.g., the main second language identifier, the sub second language identifier group, the data format information, etc.) accepted by the terminal accepting unit 22, to the server apparatus 1.

The terminal receiving unit 24 receives the various types of information (e.g., the second language speech, the one or more pieces of second language text, the translation result, etc.) distributed from the server apparatus 1.

The terminal receiving unit 24 receives second language speech distributed from the server apparatus 1. The second language speech distributed from the server apparatus 1 to the terminal apparatus 2 is second language speech corresponding to the main second language identifier contained in the user information corresponding to the terminal apparatus 2.

Furthermore, the terminal receiving unit 24 also receives one or more pieces of second language text distributed from the server apparatus 1. The one or more pieces of second language text distributed from the server apparatus 1 to the terminal apparatus 2 is, for example, second language text corresponding to the main second language identifier contained in the user information corresponding to the terminal apparatus 2. Alternatively, the one or more pieces of second language text distributed from the server apparatus 1 to the terminal apparatus 2 may be second language text corresponding to the main second language identifier contained in the user information corresponding to the terminal apparatus 2, and one or more pieces of second language text corresponding to the sub second language identifier group contained in the user information.

That is to say, for example, the terminal receiving unit 24 also receives second language text in a sub second language, which is another language, in addition to the second language text obtained through speech recognition of the second language speech.

The terminal processing unit 25 performs various types of processing. The various types of processing are, for example, processing performed by the reproducing unit 251. For example, the terminal processing unit 25 also performs various types of determination and accumulation illustrated in the flowchart. The accumulation is processing that accumulates the information received by the terminal receiving unit 24 in the terminal storage unit 21 in association with time information.

The reproducing unit 251 reproduces the second language speech received by the terminal receiving unit 24. The reproducing the second language speech typically includes output of speech via a speaker device, but may also be considered not to include it.

The reproducing unit 251 also outputs the one or more pieces of second language text. The outputting the second language text is typically display on a display screen, but may also be considered to include, for example, accumulation in a storage medium, printing by a printer, transmission to an external apparatus, delivery to another program, and the like.

The reproducing unit 251 outputs the second language text and the second language text in the sub second language received by the terminal receiving unit 24.

When resuming reproduction of second language speech after an interruption, the reproducing unit 251 performs chasing-reproduction of an un-reproduced portion in the second language speech, in fast-forward. The chasing-reproduction is processing that, after interrupting reproduction, reproduces the un-reproduced portion stored in the storage unit 11 from its beginning, while performing accumulation (which may be referred to as buffering or queueing, for example) of the second language speech received from the server apparatus 1 in the storage unit 11. If the reproducing speed of the chasing-reproduction is the same as the ordinary reproducing speed, a state in which the reproduction of the second language speech after the resuming is delayed from the real-time reproduction of the second language speech by a fixed period of time continues. The fixed period of time is a delay time when the reproduction was resumed. The delay time can be said to be, for example, a time by which the reproduction is behind the time at which the un-reproduced portion was to be reproduced.

On the other hand, if the reproducing speed of the chasing-reproduction is higher than the ordinary reproducing speed, the reproduction of the second language speech after the resuming gradually catches up with the real-time reproduction of the second language speech. The time taken until the reproduction catches up with the real-time reproduction depends on the delay time when the reproduction was resumed and the reproducing speed of the chasing-reproduction.

Specifically, for example, in the case in which, when the terminal apparatus 2 is reproducing second language speech, an un-reproduced portion in the second language speech stored in the terminal storage unit 21 has a missing part (e.g., a lost packet), the terminal transmitting unit 23 transmits a resend request (e.g., having the second language identifier, the time information, etc.) for the missing part, to the server apparatus 1 that is paired with the terminal identifier (which may also function as the user identifier).

The distributing unit 14 of the server apparatus 1 resends the missing part to the terminal apparatus 2. The terminal receiving unit 24 of the terminal apparatus 2 receives the missing part, the terminal processing unit 25 accumulates the missing part in the terminal storage unit 21, and thus the un-reproduced portion stored in the terminal storage unit 21 can be reproduced. However, the reproduction of the second language speech after the resuming is delayed from speech of a speaker or speech interpreted by an interpreter, and thus the reproducing unit 251 performs the chasing-reproduction of the second language speech stored in the terminal storage unit 21, in fast-forward.

The reproducing unit 251 performs chasing-reproduction of an un-reproduced portion in fast-forward at a speed corresponding to one or more of a delay time of the un-reproduced portion and a data size of the un-reproduced portion.

If the second language speech is a stream, for example, a delay time of the un-reproduced portion can be acquired using a difference between a timestamp of a packet at the beginning of the un-reproduced portion (the oldest packet) and a current time indicated by a built-in clock or the like. That is to say, for example, when the reproduction is resumed, the reproducing unit 251 acquires a timestamp from a packet at the beginning of the un-reproduced portion and a current time from a built-in clock or the like, and calculates a difference between the timestamp time and the current time, thereby acquiring a delay time. For example, it is also possible that a group of pairs of a difference and a delay time is stored in the terminal storage unit 21, and the reproducing unit 251 acquires a delay time that is paired with the calculated difference.

Furthermore, a data size of the un-reproduced portion can be acquired, for example, using the remaining amount in the speech buffer of the terminal storage unit 21. That is to say, for example, the reproducing unit 251 can acquire the remaining amount in the speech buffer when the reproduction is resumed, and subtracts the remaining amount from the buffer capacity, thereby acquiring a data size of the un-reproduced portion. Alternatively, a data size of the un-reproduced portion may be the number of packets queued. That is to say, the reproducing unit 251 may count the number of packets queued in a speech queue in the terminal storage unit 21 when the reproduction is resumed, and acquire the number of packets or the data size according to the number of packets.

Furthermore, if the second language speech is a stream, for example, fast-forward reproduction is realized by decimating some of the successively arranged packets constituting the stream at a constant ratio. For example, 2 speed is realized by decimating packets at a ratio of one out of every two packets, and 1.5 speed is realized by decimating packets at a ratio of one out of every three packets.

For example, it is also possible that a group of pairs of one or more types of information of a delay time and a data size and a reproducing speed is stored in the terminal storage unit 21, and the reproducing unit 251 acquires a reproducing speed that is paired with one or more types of information of a delay time and a data size acquired as described above when the reproduction is resumed, and performs decimation at a ratio according to the acquired reproducing speed, thereby performing chasing-reproduction of the un-reproduced portion in fast-forward at the reproducing speed.

For example, correspondence information regarding a correspondence between one or more of a delay time and a data size, and a speed is stored in the storage unit 11, and the reproducing unit 251 acquires a speed corresponding to the one or more of a delay time of the un-reproduced portion and a data size of the un-reproduced portion using the correspondence information, and performs reproduction in fast-forward at the acquired speed.

Furthermore, it is also possible that a function corresponding to the correspondence information is stored in the storage unit 11, and the reproducing unit 251 calculates a speed by substituting one or more of a delay time of the un-reproduced portion and a data size of the un-reproduced portion for the function, and performs reproduction in fast-forward at the calculated speed.

For example, the reproducing unit 251 starts chasing-reproduction of an un-reproduced portion in response to a data size of the un-reproduced portion exceeding a predetermined threshold or reaching the threshold.

The reproducing unit 251 also outputs the translation result. The outputting a translation result may be considered to include or to not include output of translation speech via a speaker device, and may be considered to include or to not include display of translated text on a display screen.

The storage unit 11, the speaker information group storage unit 111, the interpreter information group storage unit 112, the user information group storage unit 113, the terminal storage unit 21, and the user information storage unit 211 are, for example, preferably non-volatile storage media such as hard disks or flash memories, but can also be realized by volatile storage media such as RAMs.

There is no limitation on the procedure in which information is stored in the storage unit 11 and the like. For example, information may be stored in the storage unit 11 and the like via a storage medium, information transmitted via a network, a communication line, or the like may be stored in the storage unit 11 and the like, or information input via an input device may be stored in the storage unit 11 and the like. There is no limitation on the input device, and examples thereof include a keyboard, a mouse, and a touch panel.

The receiving unit 12 and the terminal receiving unit 24 are typically realized by wired or wireless communication parts (e.g., a communication module such as a NIC (network interface controller) or a modem), but may also be realized by broadcast receiving parts (e.g., a broadcast receiving module).

The processing unit 13, the first language speech acquiring unit 131, the second language speech acquiring unit 132, the first language text acquiring unit 133, the second language text acquiring unit 134, the translation result acquiring unit 135, the speech feature value correspondence information acquiring unit 136, the reaction acquiring unit 137, the learning module configuring unit 138, the evaluation acquiring unit 139, the terminal processing unit 25, and the reproducing unit 251 may be realized typically by MPUs, memories, or the like. Typically, the processing procedure of the processing unit 13 and the like is realized by software, and the software is stored in a storage medium such as a ROM. Note that they may be realized also by hardware (dedicated circuits).

The distributing unit 14 and the terminal transmitting unit 23 are typically realized by wired or wireless communication parts, but may also be realized by broadcasting parts (e.g., a broadcasting module).

The terminal accepting unit 22 may be considered to include or to not include an input device. The terminal accepting unit 22 may be realized by driver software for an input device, a combination of an input device and driver software therefor, or the like.

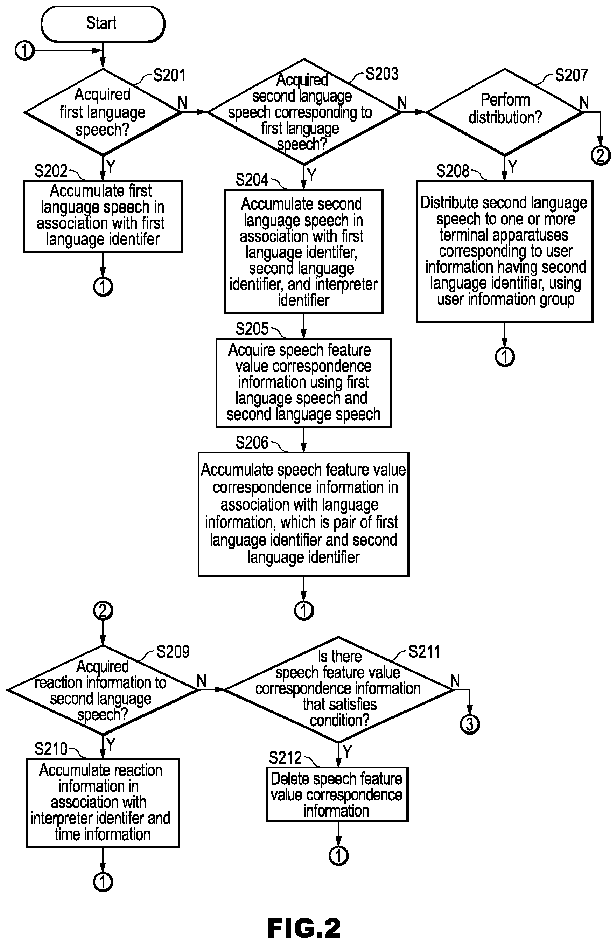

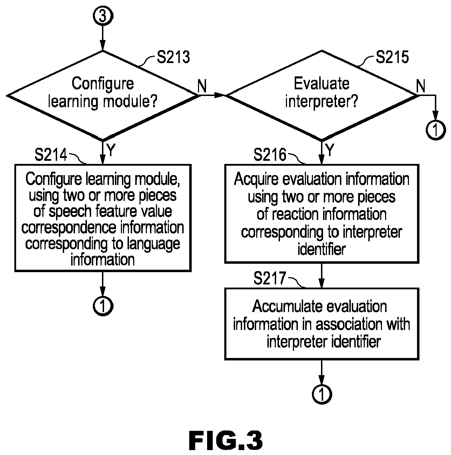

Next, an operation of the interpretation system will be described with reference to the flowcharts in FIGS. 2 to 4. FIGS. 2 and 3 are flowcharts illustrating an operation example of the server apparatus 1.

(Step S201) The processing unit 13 determines whether or not the first language speech acquiring unit 131 has acquired first language speech. If the first language speech acquiring unit 131 has acquired first language speech, the procedure advances to step S202, or otherwise the procedure advances to step S203.

(Step S202) The processing unit 13 accumulates the first language speech acquired in step S201, in the storage unit 11, in association with the first language identifier. Then, the procedure returns to step S201.

(Step S203) The processing unit 13 determines whether or not the second language speech acquiring unit 132 has acquired second language speech corresponding to the first language speech acquired in step S201. If the second language speech acquiring unit 132 has acquired corresponding second language speech, the procedure advances to step S, or otherwise the procedure advances to step S207.

(Step S204) The processing unit 13 accumulates the second language speech acquired in step S203, in the storage unit 11, in association with the first language identifier, the second language identifier, and the interpreter identifier.

(Step S205) The speech feature value correspondence information acquiring unit 136 acquires speech feature value correspondence information using the first language speech acquired in step S201 and the second language speech acquired in step S203.

(Step S206) The processing unit 13 accumulates the speech feature value correspondence information acquired in step S205, in the storage unit 11, in association with language information, which is a pair of the first language identifier and the second language identifier. Then, the procedure returns to step S201.

(Step S207) The distributing unit 14 determines whether or not to perform distribution. For example, if second language speech is acquired in step S203, the distributing unit 14 determines to perform distribution.

Alternatively, it is also possible that, if the data size of the second language speech stored in the storage unit 11 is at a threshold or more or is more than the threshold, the distributing unit 14 determines to perform distribution. Alternatively, it is also possible that distribution time information indicating the time at which to perform distribution is stored in the storage unit 11, and, if the current time acquired from a built-in clock or the like matches the time indicated by the distribution time information and the data size of the stored second language speech is at a threshold or more or is more than the threshold, the distributing unit 14 determines to perform distribution. If distribution is to be performed, the procedure advances to step S208, or otherwise the procedure advances to step S209.

(Step S208) The distributing unit 14 distributes the second language speech acquired in step S203 or the second language speech stored in the storage unit 11, to one or more terminal apparatuses 2 corresponding to user information having the second language identifier, using the user information group. Then, the procedure returns to step S201.

(Step S209) The processing unit 13 determines whether or not the reaction acquiring unit 137 has acquired reaction information to the second language speech distributed in step S208. If the reaction acquiring unit 137 has acquired reaction information to the distributed second language speech, the procedure advances to step S210, or otherwise the procedure advances to step S211.

(Step S210) The processing unit 13 accumulates the reaction information acquired in step S209, in the storage unit 11, in association with the interpreter identifier and time information. Then, the procedure returns to step S201.

(Step S211) The processing unit 13 determines whether or not there is speech feature value correspondence information that satisfies a condition, among the two or more pieces of speech feature value correspondence information stored in the storage unit 11. If there is speech feature value correspondence information that satisfies a condition, the procedure advances to step S212, or otherwise the procedure advances to step S213.

(Step S212) The processing unit 13 deletes the speech feature value correspondence information that satisfies the condition, from the storage unit 11. Then, the procedure returns to step S201.

(Step S213) The learning module configuring unit 138 determines whether or not to configure a learning module. For example, configuring time information indicating the time at which to configure a learning module is stored in the storage unit 11, and, if the current time matches the time indicated by the configuring time information and the number of pieces of speech feature value correspondence information corresponding to the language information in the storage unit 11 is at a threshold or more or more than the threshold, the learning module configuring unit 138 determines to configure a learning module. If a learning module is to be configured, the procedure advances to step S214, or otherwise the procedure returns to step S201.

(Step S214) The learning module configuring unit 138 configures a learning module, using the two or more pieces of speech feature value correspondence information corresponding to the language information. Then, the procedure returns to step S201.

(Step S215) The evaluation acquiring unit 139 determines whether or not to evaluate an interpreter. For example, evaluation time information indicating the time at which to evaluate an interpreter is stored in the storage unit 11, and, if the current time matches the time indicated by the evaluation time information, the evaluation acquiring unit 139 determines to evaluate an interpreter. If an interpreter is to be evaluated, the procedure advances to step S216, or otherwise the procedure returns to step S201.

(Step S216) The evaluation acquiring unit 139 acquires, for each of the one or more interpreter identifiers, evaluation information using the two or more pieces of reaction information corresponding to the interpreter identifier.

(Step S217) The processing unit 13 accumulates the evaluation information acquired in step S216, in the interpreter information group storage unit 112, in association with the interpreter identifier. Then, the procedure returns to step S201.

Although not shown in the flowchart in FIGS. 2 and 3, for example, the processing unit 13 also performs processing such as receiving of a missing part resend request from the terminal apparatus 2 and resend control in response to the resend request.

Furthermore, in the flowchart in FIGS. 2 and 3, the processing is started when the server apparatus 1 is turned on or a program is started, and the processing is ended when the apparatus is turned off or at an interruption of termination processing. There is no limitation on a trigger to start or end the processing.

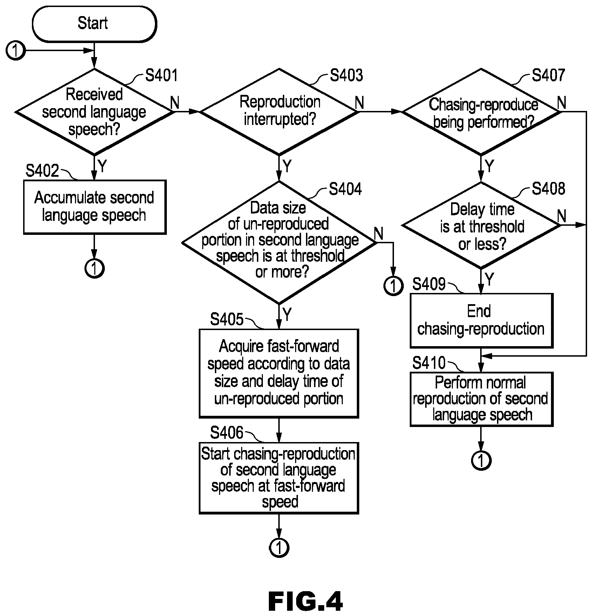

FIG. 4 is a flowchart illustrating an operation example of the terminal apparatus 2.

(Step S401) The terminal processing unit 25 determines whether or not the terminal receiving unit 24 has received second language speech. If the terminal receiving unit 24 has received second language speech, the procedure advances to step S402, or otherwise the procedure advances to step S403.

(Step S402) The terminal processing unit 25 accumulates the second language speech in the terminal storage unit 21. Then, the procedure returns to step S401.

(Step S403) The terminal processing unit 25 determines whether or not the reproduction of the second language speech has been interrupted. If the reproduction of the second language speech has been interrupted, the procedure advances to step S404, or otherwise the procedure advances to step S407.

(Step S404) The terminal processing unit 25 determines whether or not the data size of an un-reproduced portion in the second language speech stored in the terminal storage unit 21 is at a threshold or more. If the data size of an un-reproduced portion in the stored second language speech is at a threshold or more, the procedure advances to step S405, or otherwise the procedure returns to step S401.

(Step S405) The terminal processing unit 25 acquires a fast-forward speed according to the data size and the delay time of the un-reproduced portion.

(Step S406) The reproducing unit 251 starts processing that performs chasing-reproduction of the second language speech at the fast-forward speed acquired in step S405. Then, the procedure returns to step S401.

(Step S407) The terminal processing unit 25 determines whether or not chasing-reproduce is being performed. If chasing-reproduce is being performed, the procedure advances to step S408, or otherwise the procedure advances to step S410.

(Step S408) The terminal processing unit 25 determines whether or not the delay time is at a threshold or less. If the delay time is at a threshold or less, the procedure advances to step S409, or otherwise the procedure returns to step S401.

(Step S409) The reproducing unit 251 ends the chasing-reproduction of the second language speech.

(Step S410) The reproducing unit 251 performs normal reproduction of the second language speech. The normal reproduction is reproduction that is performed in real-time at a normal speed. Then, the procedure returns to step S401.

Although not shown in the flowchart in FIG. 4, for example, the terminal processing unit 25 also performs processing such as transmission of a missing part resend request to the server apparatus 1 and receiving of a missing part.

Furthermore, in the flowchart in FIG. 4, the processing started when the terminal apparatus 2 is turned on or a program is started, and the processing is ended when the apparatus is turned off or at an interruption of termination processing. There is no limitation on a trigger to start or end the processing.

Hereinafter, a specific operation example of the interpretation system in this embodiment will be described. The interpretation system originally includes a server apparatus 1, two or more terminal apparatuses 2, and two or more speaker apparatuses 3. The server apparatus 1 is communicably connected to each of the two or more terminal apparatuses 2 and the two or more speaker apparatuses 3 via a network or a communication line. The server apparatus 1 is a server of an operating company, and the terminal apparatuses 2 are mobile terminals of users. The speaker apparatuses 3 and the interpreter apparatuses 4 are terminals installed at a venue.

It is assumed that a lecturer α who is a single speaker speaks in Japanese today at a venue X. There are three interpreters A to C at the venue X, and Japanese in which the lecturer α speaks is interpreted by the interpreter A to English, by the interpreter B to Chinese, and by the interpreter C to French, respectively.

Furthermore, a debate between two speakers is performed at another venue Y A debater β, who is one of the speakers, speaks in Japanese, and a debater γ, who is the other speaker, speaks in English. There are three interpreters E to G at the venue Y, and Japanese in which the debater β speaks is interpreted by the interpreters E and F to English and Chinese respectively, and English in which the debater γ speaks is interpreted by the interpreters E and G to Japanese and Chinese respectively.

There are two or more users a to d and the like at the venue X, and there are two or more users f to h and the like at the venue Y The users can listen to interpreted speech or read interpretation text on their terminal apparatuses 2.

For example, two or more speaker information groups as shown in FIG. 5 may be stored in association with a venue identifier in the speaker information group storage unit 111 of the server apparatus 1. FIG. 5 is a data structure diagram of speaker information. The speaker information has a speaker identifier and a first language identifier.

The first speaker information group associated with the venue identifier "X" is constituted by only one piece of speaker information, and the second speaker information group associated with the venue identifier "Y" is constituted by two pieces of speaker information.

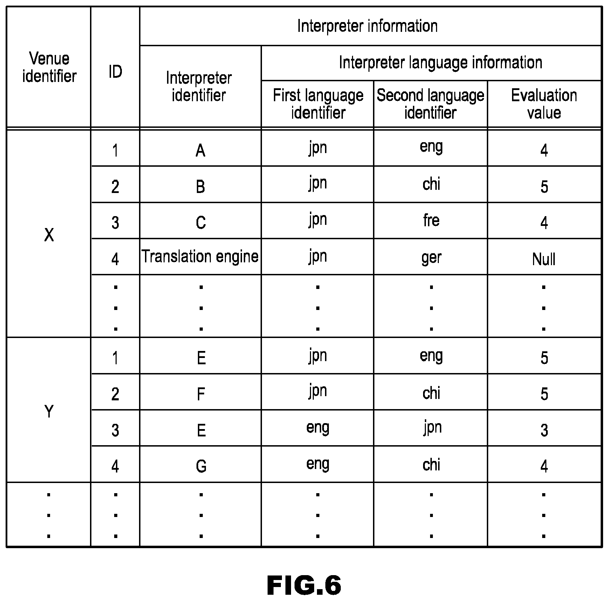

An ID (e.g., "1", "2", etc.) is associated with each of one or more pieces of speaker information constituting one speaker information group. For example, the ID "1" is associated with the only one piece of speaker information constituting the first speaker information group. The ID "1" is associated with the first piece of speaker information out of the two pieces of speaker information constituting the second speaker information group, and the ID "2" is associated with the second speaker information. Hereinafter, speaker information with which an ID "k" is associated is referred to as "speaker information k". The same applies to the interpreter information shown in FIG. 6 and the user information shown in FIG. 7.

Speaker information 1 associated with a venue identifier X has a speaker identifier "α" and a first language identifier "jpn". In a similar manner, speaker information 1 associated with a venue identifier Y has a speaker identifier "β" and a first language identifier "jpn". Speaker information 2 associated with the venue identifier Y has a speaker identifier "γ" and a first language identifier "eng".

Furthermore, for example, two or more interpreter information groups as shown in FIG. 6 may be stored in the interpreter information group storage unit 112 in association with a venue identifier. FIG. 6 is a data structure diagram of interpreter information. The interpreter information has an interpreter identifier and interpreter language information. The interpreter language information has a first language identifier, a second language identifier, and an evaluation value.

Interpreter information 1 associated with the venue identifier X has an interpreter identifier "A", and interpreter language information "jpn, eng, 4". In a similar manner, interpreter information 2 associated with the venue identifier X has an interpreter identifier "B" and interpreter language information "jpn, chi, 5". Interpreter information 3 associated with the venue identifier X has an interpreter identifier "C" and interpreter language information "jpn, fre, 4". Furthermore, interpreter information 4 associated with the venue identifier X has an interpreter identifier "translation engine" and interpreter language information "jpn, ger, Null".

Interpreter information 1 associated with the venue identifier Y has an interpreter identifier "E" and interpreter language information "jpn, eng, 5". In a similar manner, interpreter information 2 associated with the venue identifier Y has an interpreter identifier "F" and interpreter language information "jpn, chi, 5". Interpreter information 3 associated with the venue identifier Y has an interpreter identifier "E" and interpreter language information "eng, jpn, 3". Furthermore, interpreter information 4 associated with the venue identifier Y has an interpreter identifier "G" and interpreter language information "eng, chi, 4".

Furthermore, for example, two or more user information groups as shown in FIG. 7 may be stored in the user information group storage unit 113 in association with a venue identifier. FIG. 7 is a data structure diagram of user information. The user information has a user identifier and user language information. The user language information has a main second language identifier, a sub second language identifier group, and data format information.

User information 1 associated with the venue identifier X has a user identifier "a" and user language information "eng, Null, speech". In a similar manner, user information 2 associated with the venue identifier X has a user identifier "b" and user language information "chi, Null, speech & text". User information 3 associated with the venue identifier X has a user identifier "c" and user language information "ger, Null, text". Furthermore, user information 4 associated with the venue identifier X has a user identifier "d" and user language information "fre, eng, speech & text".

User information 1 associated with the venue identifier Y has a user identifier "f" and user language information "eng, Null, speech". In a similar manner, user information 2 associated with the venue identifier Y has a user identifier "g" and user language information "chi, Null, speech". User information 3 associated with the venue identifier Y has a user identifier "h" and user language information "jpn, eng, text".

Before the seminar at the venue X and the debate at the venue Y are started, an operator of the interpretation system inputs, for each venue, a speaker information group and an interpreter information group via an input device such as a keyboard. The processing unit 13 of the server apparatus 1 accumulates the input speaker information group in the speaker information group storage unit 111 in association with the venue identifier, and accumulates the input interpreter information group in the interpreter information group storage unit 112 in association with the venue identifier. As a result, two or more pieces of speaker information as shown in FIG. 5 are stored in the speaker information group storage unit 111, and two or more pieces of interpreter information as shown in FIG. 6 are stored in the interpreter information group storage unit 112. At this point in time, all pieces of interpreter information has an evaluation value of "Null".

The two or more users input information such as a venue identifier and user information via input devices of the terminal apparatuses 2. The input information is accepted by the terminal accepting units 22 of the terminal apparatuses 2, accumulated in the user information storage units 211, and transmitted by the terminal transmitting units 23 to the server apparatus 1.

The receiving unit 12 of the server apparatus 1 receives the information from the two or more terminal apparatuses 2 and accumulates it in the user information group storage unit 113. As a result, two or more pieces of user information as shown in FIG. 7 are stored in the user information group storage unit 113.

Speaker identifiers also functioning as identifiers for identifying the speaker apparatuses 3 are respectively stored in the two or more speaker apparatuses 3. Interpreter identifiers also functioning as identifiers for identifying the interpreter apparatuses 4 are respectively stored in the two or more interpreter apparatuses 4.

During the period in which the seminar is held at the venue X, the interpretation system performs the following processing.

When a speaker α speaks, first language speech is transmitted in a pair with the speaker identifier "α" from the speaker apparatus 3 corresponding to the speaker α to the server apparatus 1.

In the server apparatus 1, the first language speech acquiring unit 131 receives the first language speech in a pair with the speaker identifier "a", and the processing unit 13 acquires a first language identifier "jpn" corresponding to the speaker identifier "a" from the speaker information group storage unit 111. Then, the processing unit 13 accumulates the received first language speech in the storage unit 11 in association with the first language identifier "jpn".

Furthermore, the first language text acquiring unit 133 acquires first language text through speech recognition of the first language speech. The processing unit 13 accumulates the acquired first language text in the storage unit 11 in association with the first language speech.

Furthermore, the translation result acquiring unit 135 acquires a translation result containing translated text and translation speech through translation performed using a translation engine from the first language text to German. The processing unit 13 accumulates the acquired translation result in the storage unit 11 in association with the first language speech.

When the interpreter A interprets the speech of the speaker a to English, second language speech is transmitted in a pair with the interpreter identifier "A" from the interpreter apparatus 4 corresponding to the interpreter A.

In the server apparatus 1, the second language speech acquiring unit 132 receives the second language speech in a pair with the interpreter identifier "A", and the processing unit 13 acquires two first and second language identifiers "jpn" and "eng" corresponding to the interpreter identifier "A" from the interpreter information group storage unit 112. Then, the processing unit 13 accumulates the received second language speech in the storage unit 11 in association with the first language identifier "jpn", the second language identifier "eng", and the interpreter identifier "A". Meanwhile, the speech feature value correspondence information acquiring unit 136 acquires speech feature value correspondence information using the first language speech and the second language speech, and the processing unit 13 accumulates the acquired speech feature value correspondence information in the storage unit 11 in association with language information "jpn-eng", which is a pair of the first language identifier "jpn" and the second language identifier "eng".

When the interpreter B interprets the speech of the speaker α to Chinese, second language speech is transmitted in a pair with the interpreter identifier "B" from the interpreter apparatus 4 corresponding to the interpreter B.

In the server apparatus 1, the second language speech acquiring unit 132 receives the second language speech in a pair with the interpreter identifier "B", and the processing unit 13 acquires two first and second language identifiers "jpn" and "chi" corresponding to the interpreter identifier "B" from the interpreter information group storage unit 112. Then, the processing unit 13 accumulates the received second language speech in the storage unit 11 in association with the first language identifier "jpn", the second language identifier "chi", and the interpreter identifier "B". Meanwhile, the speech feature value correspondence information acquiring unit 136 acquires speech feature value correspondence information using the first language speech and the second language speech, and the processing unit 13 accumulates the acquired speech feature value correspondence information in the storage unit 11 in association with the language information "jpn-chi".

When the interpreter C interprets the speech of the speaker α to French, second language speech is transmitted in a pair with the interpreter identifier "C" from the interpreter apparatus 4 corresponding to the interpreter C.

In the server apparatus 1, the second language speech acquiring unit 132 receives the second language speech in a pair with the interpreter identifier "C", and the processing unit 13 acquires two first and second language identifiers "jpn" and "fre" corresponding to the interpreter identifier "C" from the interpreter information group storage unit 112. Then, the processing unit 13 accumulates the received second language speech in the storage unit 11 in association with the first language identifier "jpn", the second language identifier "fre", and the interpreter identifier "C". Meanwhile, the speech feature value correspondence information acquiring unit 136 acquires speech feature value correspondence information using the first language speech and the second language speech, and the processing unit 13 accumulates the acquired speech feature value correspondence information in the storage unit 11 in association with the language information "jpn-fre".

If the current time is the time indicated by the distribution time information, the distributing unit 14 distributes the second language speech, the second language text, and the translation result using the user information group corresponding to the venue identifier X.

Specifically, the distributing unit 14 transmits the second language speech corresponding to the main second language identifier "eng", to the terminal apparatus 2 of the user a, using the user information 1 corresponding to the venue identifier X. The distributing unit 14 transmits the second language speech corresponding to the main second language identifier "chi" and the second language text corresponding to the main second language identifier "chi", to the terminal apparatus 2 of the user b, using the user information 2 corresponding to the venue identifier X. The distributing unit 14 transmits the translated text corresponding to the main second language identifier "ger", to the terminal apparatus 2 of the user c, using the user information 3 corresponding to the venue identifier X. Furthermore, the distributing unit 14 transmits the second language speech corresponding to the main second language identifier "fre", the second language text corresponding to the main second language identifier "fre", and the second language text corresponding to the sub second language identifier group "eng", to the terminal apparatus 2 of the user d, using the user information 4 corresponding to the venue identifier X.

In each of the terminal apparatuses 2 to which the second language speech was transmitted, the terminal receiving unit 24 receives the second language speech, and the terminal processing unit 25 accumulates the received second language speech in the terminal storage unit 21. The reproducing unit 251 reproduces the second language speech stored in the terminal storage unit 21.

If the reproduction of the second language speech has been interrupted, the terminal processing unit 25 determines whether or not the data size of an un-reproduced portion in the second language speech stored in the terminal storage unit 21 is at a threshold or more. Then, if the data size of the un-reproduced portion is at a threshold or more, the terminal processing unit 25 acquires a fast-forward speed according to the data size of the un-reproduced portion and the delay time of the un-reproduced portion.

For example, assuming that the normal reproduction speed is 10 packets/sec, if the data size of the un-reproduced portion is 50 packets and the delay time of the un-reproduced portion is 5 seconds, the terminal processing unit 25 may calculate the fast-forward speed V as "10+(50/5) = 20 packets/sec". The reproducing unit 251 performs chasing-reproduction of the un-reproduced portion at the thus acquired fast-forward speed.

In each of the terminal apparatuses 2 to which one or more of the second language text and the translated text were transmitted, the terminal receiving unit 24 receives the one or more pieces of text, and the reproducing unit 251 outputs the received one or more pieces of text.

In the server apparatus 1, the reaction acquiring unit 137 acquires reaction information to the thus distributed second language speech, using one or more types of information out of an image captured by a camera installed at the venue X, and voice of the two or more users a to d at the venue X captured by built-in microphones of the terminal apparatuses 2 held by the users. The processing unit 13 accumulates the acquired reaction information in the storage unit 11 in association with the interpreter identifier and time information. The two or more pieces of reaction information stored in the storage unit 11 are used, for example, by the evaluation acquiring unit 139 to evaluate of one or more interpreters.

Furthermore, the stored two or more pieces of reaction information are also used by the processing unit 13 to delete speech feature value correspondence information that satisfies a predetermined condition, among the two or more pieces of speech feature value correspondence information stored in the storage unit 11. The predetermined condition is as described above, and thus a description thereof will not be repeated. Accordingly, the level of precision of the learning module constituted by the learning module configuring unit 138 can be increased.

The configuring time information is stored in the storage unit 11, and the learning module configuring unit 138 determines whether or not the current time acquired from a built-in clock or the like is the time indicated by the configuring time information. If the current time is the time indicated by the configuring time information, the learning module configuring unit 138 configures, for each of the two or more pieces of language information, a learning module using the two or more pieces of speech feature value correspondence information stored in the storage unit 11 in association with the language information. The learning module is as described above, and thus a description thereof will not be repeated.

In this manner, if a learning module is configured for each of the two or more pieces of language information, for example, it is possible to perform interpretation using a learning module corresponding to language information even in the case in which there is no interpreter corresponding to the language information.

Furthermore, evaluation time information is stored in the storage unit 11, and the evaluation acquiring unit 139 determines whether or not the current time acquired from a built-in clock or the like is the time indicated by the evaluation time information. If the current time is the time indicated by the evaluation time information, the evaluation acquiring unit 139 acquires, for each of the one or more interpreter identifiers, evaluation information using the two or more pieces of reaction information corresponding to the interpreter identifier. The evaluation information is as described above, and thus a description thereof will not be repeated. The processing unit 13 accumulates the acquired evaluation information, in the interpreter information group storage unit 112, in association with the interpreter identifier.

Accordingly, the evaluation values "Null" of the three pieces of interpreter information 1 to 3 excluding the interpreter information 4 having the interpreter identifier "translation engine", among the interpreter information 1 to 4 constituting the interpreter information group corresponding to the venue identifier "X", are respectively updated to "4", "5", and "4".

The processing that is performed by the interpretation system during the period in which the debate is held at the venue Y, is as described above, and thus a description thereof has been omitted. The processing that is performed by the interpretation system during the period in which the seminar and the debate are simultaneously held is as described above, and thus a description thereof has been omitted.

As described above, with this embodiment, the interpretation system is an interpretation system realized by a server apparatus 1 and one or at least two terminal apparatuses 2, an interpreter information group, which is a group of one or more pieces of interpreter information, is stored in the interpreter information group storage unit 112, the information being information regarding an interpreter who interprets speech in a first language to a second language, and having a first language identifier for identifying the first language, a second language identifier for identifying the second language, and an interpreter identifier for identifying the interpreter, and a user information group, which is a group of one or more pieces of user information, is stored in the user information group storage unit 113, the information being information regarding users of one or more terminal apparatuses 2, and having a user identifier for identifying the user and a second language identifier for identifying a language used by the user for listening or reading.

The server apparatus 1 acquires one or more pieces of second language speech, which are data of speech obtained from speech in a first language spoken by one speaker, through interpretation performed by one or more interpreters respectively to second languages, and distributes, to each of the one or more terminal apparatuses 2, second language speech corresponding to the second language identifier contained in the user information corresponding to the terminal apparatus 2, out of the acquired one or more pieces of second language speech, using the user information group.

The one or more terminal apparatuses 2 receive second language speech distributed from the server apparatus 1, and reproduce the received second language speech.

Accordingly, it is possible to provide an interpretation system realized by a server apparatus 1 and one or more terminal apparatuses 2, and configured to distribute, to one or more users, one or more pieces of interpreted speech obtained from speech of one speaker through interpretation performed by one or more interpreters, wherein the server apparatus 1 properly manages information regarding languages of one or more interpreters.

As a result, it is possible to provide various interpretation services using one or more interpreters. For example, it is possible to distribute, to each of the one or more terminal apparatuses 2, speech interpreted by an interpreter corresponding to a language used for listening or reading by the user of the terminal apparatus 2 in a seminar in which one speaker speaks, and to distribute, to the two or more terminal apparatuses 2, pieces of speech interpreted by one or more interpreters corresponding to languages used for listening or reading by the users of the terminal apparatuses 2 in an international conference in which two or more speakers have a debate.

Furthermore, a second aspect of the present invention is directed to the interpretation system according to the first aspect, wherein the server apparatus 1 acquires one or more pieces of second language text, which are data of text respectively obtained through speech recognition of the acquired one or more pieces of second language speech, and distributes, to the one or more terminal apparatuses 2, the acquired one or more pieces of second language text, and the terminal apparatuses 2 also receive the one or more pieces of second language text distributed from the server apparatus 1, and also output the one or more pieces of second language text.

Accordingly, it is possible to distribute not only pieces of speech interpreted by one or more interpreters, but also one or more pieces of text respectively obtained through speech recognition of the pieces of speech.

Furthermore, when resuming reproduction of second language speech after an interruption, the terminal apparatuses 2 performs chasing-reproduction of an un-reproduced portion in the second language speech, in fast-forward.

Accordingly, even when reproduction of speech interpreted by an interpreter is breaking up on the one or more terminal apparatuses 2, the users can listen to the un-reproduced portion without omission so as to make up for the delay.

Furthermore, the terminal apparatuses 2 performs chasing-reproduction of the un-reproduced portion in fast-forward at a speed corresponding to one or more of a delay time of the un-reproduced portion and a data size of the un-reproduced portion. Accordingly, it is easy to make up for the delay in fast-forward at a proper speed.

Furthermore, the terminal apparatuses 2 starts chasing-reproduction of an un-reproduced portion in response to a data size of the un-reproduced portion exceeding a predetermined threshold or reaching the threshold, and thus it is possible to make up for the delay while preventing the reproduction from being breaking up again.

Furthermore, the server apparatus 1 acquires first language text, which is data of text obtained through speech recognition of speech in the first language spoken by one speaker, acquires one or more translation results containing one or more pieces of data among translated text obtained through translation performed using a translation engine from the first language text to the second language and translation speech obtained through conversion from the translated text into speech, and further distributes, to each of the one or more terminal apparatuses 2, translation result corresponding to the second language identifier contained in the user information corresponding to the terminal apparatus 2, out of the acquired one or more translation results, using the user information group, and the terminal apparatus 2 also receives and reproduces the translation result distributed from the server apparatus 1. Accordingly, it is also possible for the users to use a translation result obtained by a translation engine.

In the above-described configuration, it is also possible that one or more pieces of speaker information are stored in the speaker information group storage unit 111, the speaker information having a speaker identifier for identifying a speaker and a first language identifier for identifying a first language in which the speaker speaks, and the server apparatus 1 acquires first language text corresponding to each of the one or more speakers, using the speaker information group.

Furthermore, the server apparatus 1 acquires only one or more translation results corresponding to one or more second language identifiers that are different from the one or more second language identifiers contained in the interpreter information group, and does not acquire one or more translation results corresponding to one or more second language identifiers that are the same as any of the one or more second language identifiers contained in the interpreter information group, among the one or more second language identifiers contained in the user information group, and thus it is possible to efficiently perform only necessary translation.

Furthermore, the terminal apparatuses 2 accepts an operation that chooses one or more data formats out of speech and text, and reproduces one or more pieces of data corresponding to the chosen one or more data formats, out of second language speech corresponding to the second language identifier contained in the user information regarding the user of the terminal apparatuses 2 and second language text obtained through speech recognition of the second language speech. Accordingly, it is possible for each user to use one or more of speech and text of a translator corresponding to his or her language.

Furthermore, the terminal apparatuses 2 also receives, in addition to the second language text, second language text in a sub second language, which is another language, and outputs the received second language text and the second language text in the sub second language.

Accordingly, it is possible for each user to also use text of an interpreter who is not an interpreter corresponding to his or her language.

In the above-described configuration, in the case in which at least text is chosen as the data format, the terminal apparatuses 2 can also accept an operation that further chooses a sub second language identifier group, which is a group of one or more second language identifiers that are different from a main second language identifier that is a second language identifier contained in the user information regarding the user of the terminal apparatuses 2, out of the two or more second language identifiers contained in the translator information group, and, in the case in which a sub second language identifier group is chosen, the terminal apparatuses can also receive one or more pieces of second language text corresponding to the sub second language identifier group from the server apparatus 1, and can output the one or more pieces of second language text corresponding to the sub second language identifier group, together with the second language text corresponding to the main second language identifier.

Furthermore, one or more interpreter information groups and one or more user information groups are respectively stored in the interpreter information group storage unit 112 and the user information group storage unit 113 in association with a venue identifier for identifying a venue, the user information further has a venue identifier, and the second language speech acquiring unit 132 and the distributing unit 14 acquire and distribute one or more pieces of second language speech for each of two or more venue identifiers. Accordingly, it is possible to acquire and distribute one or more pieces of second language speech for each of two or more venues.

Furthermore, the server apparatus 1 acquires first language speech, which is data of speech in the first language spoken by one speaker, acquires speech feature value correspondence information indicating a correspondence between feature values of first language speech and second language speech, using the acquired first language speech and the acquired one or more pieces of second language speech, for each of one or more pieces of language information, which are each a pair of a first language identifier and a second language identifier, and configures a learning module in which the first language speech is taken as input and the second language speech is taken as output, for each of the one or more pieces of language information, using the speech feature value correspondence information.

Accordingly, it is possible to interpret a first language to one or more second languages using a learning module.

Furthermore, the server apparatus 1 acquires reaction information, which is information regarding a reaction from the user to the second language speech reproduced by the reproducing unit 251, and configures a learning module, using speech feature value correspondence information acquired from two or more pairs of first language speech and second language speech selected using the reaction information.

In this manner, it is possible to select the speech feature value correspondence information using a reaction from the user, thereby configuring a precise learning module.

Furthermore, the server apparatus 1 acquires reaction information, which is information regarding a reaction from the user to the second language speech reproduced by the terminal apparatuses 2, and acquires, for each of one or more interpreters, evaluation information regarding an evaluation of the interpreter, using the reaction information corresponding to the interpreter.

Accordingly, it is possible to evaluate one or more interpreters using a reaction from the user.

In this embodiment, the processing unit 13 determines whether or not there is a speech feature value correspondence information that satisfies a predetermined condition, using the two or more pieces of reaction information stored in the storage unit 11 (S211), and, if there is speech feature value correspondence information that satisfies a condition, the speech feature value correspondence information is deleted (S212), but, instead of this configuration, it is also possible to apply a configuration in which it is determined whether or not the reaction information acquired by the reaction acquiring unit 137 satisfies a predetermined condition, for example, such as "one or more of a clapping sound or a nodding motion are detected", wherein only second language speech corresponding to reaction information that satisfies the condition is accumulated in the storage unit 11, whereas second language speech corresponding to reaction information that does not satisfy the condition is not accumulated.

In this case, the flowchart in FIG. 2 is changed, for example, as follows.

The procedure after step S204 is changed so as to return to step S201, by deleting the two steps S205 and S206. Steps S211 and S212 are changed as follows.

(Step S211) The processing unit 13 determines whether or not the reaction information acquired in step S209 satisfies a predetermined condition. If the acquired reaction information satisfies a predetermined condition, the procedure advances to step S212, or otherwise the procedure advances to step S213.

(Step S212) The speech feature value correspondence information acquiring unit 136 acquires speech feature value correspondence information, using the first language speech acquired in step S201 and the second language speech corresponding to the reaction information determined as satisfying the condition in step S211.

Furthermore, new step S213 corresponding to the deleted step S206 is added after step S212.

(Step S213) The processing unit 13 accumulates the speech feature value correspondence information acquired in step S112, in the storage unit 11, in association with language information, which is a pair of the first language identifier and the second language identifier. Then, the procedure returns to step S201.

The processing in this embodiment may be realized by software. The software may be distributed by software downloads or the like. Furthermore, the software may be distributed in a form where the software is stored in a storage medium such as a CD-ROM.

The software that realizes the server apparatus 1 in this embodiment is, for example, the following sort of program. Specifically, this program is, for example, a program for causing a computer capable of accessing: an interpreter information group storage unit 112 in which an interpreter information group, which is a group of one or more pieces of interpreter information, is stored, the information being information regarding an interpreter who interprets speech in a first language to a second language, and having a first language identifier for identifying the first language, a second language identifier for identifying the second language, and an interpreter identifier for identifying the interpreter; and a user information group storage unit 113 in which a user information group, which is a group of one or more pieces of user information, is stored, the information being information regarding a user of each of the one or at least two terminal apparatuses 2, and having a user identifier for identifying the user and a second language identifier for identifying a language used by the user for listening or reading, to function as: a second language speech acquiring unit 132 that acquires one or more pieces of second language speech, which are data of speech obtained from speech in a first language spoken by one speaker, through interpretation performed by one or more interpreters respectively to second languages; and a distributing unit 14 that distributes, to each of the one or more terminal apparatuses 2, second language speech corresponding to the second language identifier contained in the user information corresponding to the terminal apparatus 2, out of the one or more pieces of second language speech acquired by the second language speech acquiring unit 132, using the user information group.

Furthermore, the software that realizes each of the terminal apparatuses 2 in this embodiment is, for example, the following sort of program. Specifically, this program is a program for causing a computer to function as: a terminal receiving unit 24 that receives the second language speech distributed by the distributing unit 14; and a reproducing unit 251 that reproduces the second language speech received by the terminal receiving unit 24.

### Embodiment 2

Hereinafter, the interpretation system in this embodiment will be described in detail only in terms of aspects different from those in Embodiment 1, and a description of aspects similar thereto will be omitted or simplified.

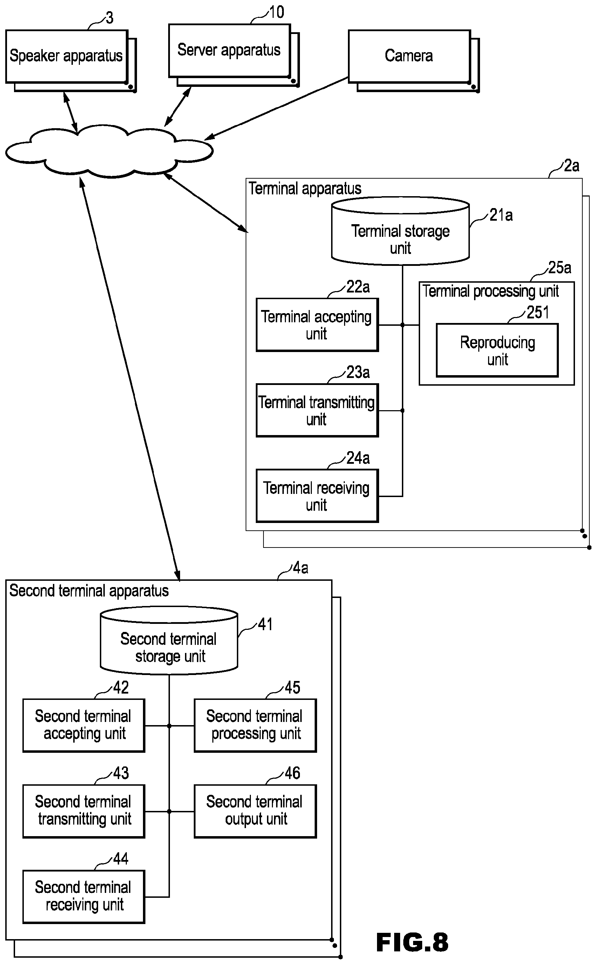

FIG. 8 is a block diagram of an interpretation system in this embodiment. The interpretation system includes a server apparatus 10, one or at least two terminal apparatuses 2a, and one or at least two second terminal apparatuses 4a. The interpretation system typically includes one or at least two speaker apparatuses 3 as well.

The server apparatus 10 is communicably connected to each of the one or more terminal apparatuses 2a and the one or more second terminal apparatuses 4a, and the like, for example, via a network or a communication line. A camera for capturing an image at a venue is connected to the server apparatus 10 via a network or the like or directly in a wired or wireless manner. The number of cameras may be one, or two or more. Hereinafter, a description will be given assuming that the number of cameras is typically one.

As with Embodiment 1, for example, the server apparatus 10 is a server of an operating company that operates the interpretation system, and, for example, the terminal apparatuses 2a are mobile terminals of users who use the interpretation system. For example, the second terminal apparatuses 4a are mobile terminals of interpreters, but they may be desktop terminals.

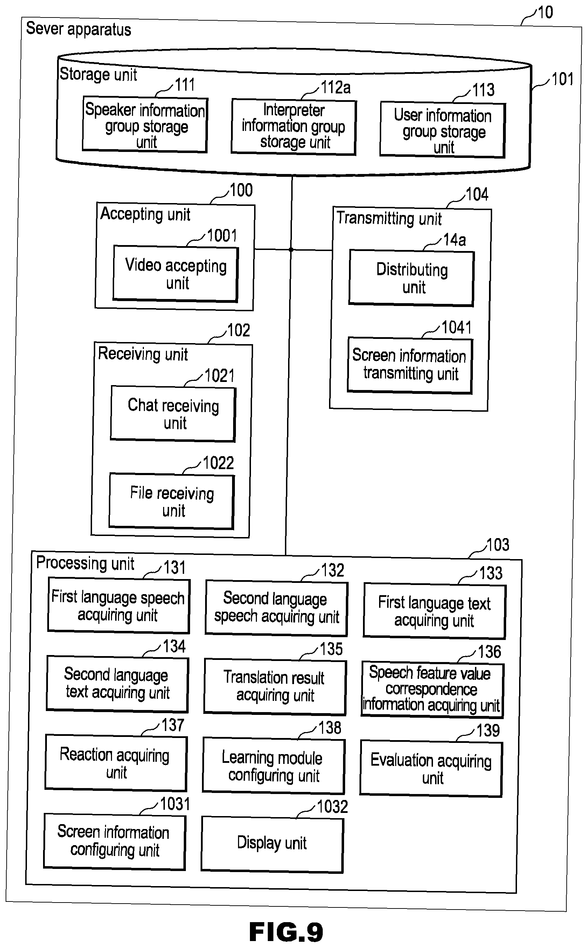

FIG. 9 is a block diagram of the server apparatus 10. The server apparatus 10 includes a storage unit 101, an accepting unit 100, a receiving unit 102, a processing unit 103, and a transmitting unit 104. The storage unit 101 includes a speaker information group storage unit 111, an interpreter information group storage unit 112a, and a user information group storage unit 113. That is to say, the storage unit 101 is obtained by replacing the interpreter information group storage unit 112 in the storage unit 11 of Embodiment 1 with the interpreter information group storage unit 112a.

The accepting unit 100 includes a video accepting unit 1001. The receiving unit 102 includes a chat receiving unit 1021 and a file receiving unit 1022. The processing unit 103 includes a first language speech acquiring unit 131, a second language speech acquiring unit 132, a first language text acquiring unit 133, a second language text acquiring unit 134, a translation result acquiring unit 135, a speech feature value correspondence information acquiring unit 136, a reaction acquiring unit 137, a learning module configuring unit 138, an evaluation acquiring unit 139, a screen information configuring unit 1031, and a display unit 1032. The transmitting unit 104 includes a distributing unit 14a and a screen information transmitting unit 1041.

The terminal apparatuses 2a each include a terminal storage unit 21a, a terminal accepting unit 22a, a terminal transmitting unit 23a, a terminal receiving unit 24a, and a terminal processing unit 25a. The terminal processing unit 25a includes a reproducing unit 251.

The second terminal apparatuses 4a each include a second terminal storage unit 41, a second terminal accepting unit 42, a second terminal transmitting unit 43, a second terminal receiving unit 44, a second terminal processing unit 45, and a second terminal output unit 46.

Various types of information may be stored in the storage unit 101 constituting the server apparatus 10. The various types of information are various types of information stored in the storage unit 11 in Embodiment 1. Moreover, for example, one or at least two user interface components, layout information, and the like are also stored in the storage unit 101. The user interface components and the layout information will be described later.

An interpreter information group is stored in the interpreter information group storage unit 112a. The stored interpreter information group is basically the same as the interpreter information group stored in the interpreter information group storage unit 112 in Embodiment 1. Each of the one or more pieces of interpreter information constituting the interpreter information group in this embodiment further has an interpreter image. It is not always necessary that all pieces of interpreter information have an interpreter image.

For example, the interpreter image is received by a later-described receiving unit 102, and accumulated by the processing unit 103 in the interpreter information group storage unit 112a. The interpreter image may be stored in advance in the interpreter information group storage unit 112a.

The interpreter image is an image of an interpreter. For example, the interpreter image is preferably an image captured by a camera of the second terminal apparatus 4a (i.e., a moving image), but it also may be an image captured in advance by this camera or another camera. Alternatively, the interpreter image may also be an illustrated image of an interpreter, and there is no limitation on the type thereof.

Furthermore, the interpreter information has, for example, state information. The state information is information regarding a state of an interpreter. The state information may be, for example, information for specifying an interpreter who is currently performing interpretation or an interpreter who is not currently performing interpretation. The state information is specifically, for example, "interpreting", "not interpreting", or the like, but there is no limitation on the form thereof.

Furthermore, the state information may indicate, for example, any one of at least three states consisting of a state of being currently performing interpretation, a state of being ready to perform interpretation, and a state of not being ready to perform interpretation. This state information is specifically, for example, "interpreting", "waiting", "preparing", or the like, but there is no limitation on the form thereof.

The state information is, for example, received by a later-described receiving unit 102, and accumulated by the processing unit 103 in the interpreter information group storage unit 112a.

Furthermore, the interpreter information may also have, for example, volume information. The volume information is information for specifying a volume set by an interpreter. An interpreter can set a volume for each of the two or more languages, and the interpreter information may have, for example, volume information for specifying volumes corresponding to each of the two or more languages, in association with the language identifier.

The volume information and the like are, for example, received by a later-described receiving unit 102, and accumulated by the processing unit 103 in the interpreter information group storage unit 112a.

The accepting unit 100 accepts various types of information. The various types of information are, for example, a later-described video. For example, the accepting unit 100 may also accept an instruction from an interpreter via the above-described user interface components or via an input device such as a keyboard or a mouse. The instruction from an interpreter will be described later. The accepting may be, for example, receiving information on an interpreter image or the like accepted by the second terminal apparatuses 4a.

Furthermore, for example, the accepting unit 100 may accept information read from a storage medium such as a disk or a semiconductor memory, and there is no limitation on the accepting form. Furthermore, there is no limitation on the type of accepted information.

The video accepting unit 1001 accepts a video. The video is a video obtained by capturing an image at a venue. The video is typically a video obtained by capturing an image of a state at a venue in which a speaker speaks, and, for example, it can be said to be a live video at a venue.

Specifically, for example, a camera installed at the venue captures an image of a state at the venue, and the accepting unit 100 accepts the captured video. For example, the camera may be connected to the server apparatus 1 directly in a wired or wireless manner, or may be connected to the server apparatus 1 via a network, a communication line, or the like. In the case of the latter, the accepting unit 100 receives information transmitted from the camera.

The receiving unit 102 receives various types of information. The various types of information are, for example, various types of information (e.g., chat information, an operation that chooses a file identifier, etc.) accepted by a later-described terminal accepting unit 42 of the terminal apparatus 2a. Moreover, for example, the receiving unit 102 also receives various types of information (e.g., an interpreter image, state information, chat information to a user, an operation that inputs a file identifier to a chat region, etc.) accepted by a later-described second terminal accepting unit 42.

The chat receiving unit 1021 receives chat information from the terminal apparatuses 2a or the second terminal apparatuses 4a. The chat is communication that is performed between two or more terminals via a network, a communication line, or the like. The chat may be, for example, communication between one second terminal apparatus 4a and one or at least two terminal apparatuses 2a (i.e., one interpreter and one or at least two users), or communication between two or more second terminal apparatuses 4a (i.e., between interpreters, or between an interpreter and a staff member who is not an interpreter). The staff member who is not an interpreter is, for example, an administrator of the interpretation system, but may be a staff member or the like at a venue, and any member is possible as long as the member is engaged in a simultaneous interpretation service.

The chat information is typically a character string exchanged in chat, but may also be an image. The character string is, for example, a conversation sentence, but may also be a file identifier or the like, and there is no limitation on the type thereof.

The terminal apparatuses 2a typically transmit chat information that is paired with a language identifier, whereas the second terminal apparatuses 4a typically transmit only chat information and do not transmit a language identifier. Accordingly, for example, the chat receiving unit 1021 receives the chat information from the one or more second terminal apparatuses 4a, and receives the chat information that is paired with a language identifier from the two or more terminal apparatuses 2a.

The file receiving unit 1022 receives a file from the terminal apparatuses 2a or the second terminal apparatuses 4a. The file can be said to be information such as text or images transferred between the terminal apparatuses 2a and the second terminal apparatuses 4a or between the two or more second terminal apparatuses 4a. The file typically has a file identifier. The file identifier is information for identifying a file. The file identifier is, for example, a character string indicating a file name or the like, but may also be an image such as an icon associated with the character string, and there is no limitation on the structure thereof.

The file receiving unit 1022 typically receives a file that may be transferred to one or more terminal apparatuses 2a, from one second terminal apparatus 4a. Specifically, for example, if a file identifier is input to one of two or more first chat regions contained in a screen that is displayed on one second terminal apparatus 4a, a file identified with the file identifier is transmitted in a pair with the language identifier corresponding to the one first chat region, from the one second terminal apparatus 4a to the server apparatus 10. The file receiving unit 1022 receives the file transmitted in this manner from the one second terminal apparatus 4a, in a pair with the language identifier.

The file received by the file receiving unit 1022 is, for example, accumulated by a later-described processing unit 103 in the storage unit 101, and a later-described screen information configuring unit 1031 configures screen information of a screen on which the file identifier of the file is displayed. Then, for example, if a file identifier displayed in a chat region is chosen on a terminal apparatus 2a or second terminal apparatus 4a that received the screen information, a later-described transmitting unit 104 may transmit the file identified with the file identifier to the terminal apparatus 2a or second terminal apparatus 4a. The technique for transferring a file is known, and thus a detailed description thereof has been omitted.

The processing unit 103 performs various types of processing. The various types of processing are processing performed by the first language speech acquiring unit 131, the second language speech acquiring unit 132, the first language text acquiring unit 133, the second language text acquiring unit 134, the translation result acquiring unit 135, the speech feature value correspondence information acquiring unit 136, the reaction acquiring unit 137, the learning module configuring unit 138, the evaluation acquiring unit 139, the screen information configuring unit 1031, the display unit 1032, and the like.

For example, the processing unit 103 also performs processing that acquires, from each of the two or more second terminal apparatuses 4a, an interpreter image captured by a camera of the second terminal apparatus 4a in a pair with an interpreter identifier via the receiving unit 102, and accumulates the acquired interpreter image, in the interpreter information group storage unit 112a, in association with the interpreter identifier. Note that, if the interpreter image is stored in advance in the interpreter information group storage unit 112a, the processing unit 103 does not have to perform this processing.

Furthermore, for example, the processing unit 103 also performs processing that acquires, from each of the two or more second terminal apparatuses 4a, state information in a pair with an interpreter identifier via the receiving unit 102, and accumulates the acquired state information, in the interpreter information group storage unit 112a, in association with the interpreter identifier.

Furthermore, for example, the processing unit 103 also performs processing that acquires, from each of the two or more second terminal apparatuses 4a, volume information or the like in a pair with an interpreter identifier via the receiving unit 102, and accumulates the acquired volume information or the like, in the interpreter information group storage unit 112a, in association with the interpreter identifier.

For example, the processing unit 103 also performs processing that accumulates the chat information received by the chat receiving unit 1021 in the storage unit 101, processing that accumulates the file received by the file receiving unit 1022 in the storage unit 101, and the like. Typically, a terminal identifier or an interpreter identifier is associated with the information such as chat information or a file transmitted from the terminal apparatuses 2a or the second terminal apparatuses 4a, and the processing unit 103 typically accumulates the received information such as chat information or a file, in the storage unit 101, in association with the terminal identifier or the interpreter identifier. In particular, it is also possible that a language identifier is also associated with the chat information, and the processing unit 103 accumulates the received chat information, in the storage unit 101, in association with a pair of the terminal identifier or the interpreter identifier and the language identifier.

The screen information configuring unit 1031 configures screen information. The screen information configuring unit 1031 typically configures screen information for each of the two or more interpreters. It is also possible that the screen information configuring unit 1031 configures one piece of screen information, and the s one piece of screen information is customized for each of the two or more interpreters, in the two or more second terminal apparatuses 4a.

The screen information is information for configuring a screen. The screen information is realized by, for example, an HTML, an XML, or the like, but there is no limitation on the realization method. The screen in this embodiment is a screen of each second terminal apparatus 4a. The screen contains, for example, a video obtained by capturing an image at a venue, and two or more interpreter images. The screen information has, in addition to the video and the two or more interpreter images, for example, one or at least two user interface components, layout information regarding the arrangement of the one or more user interface components in the screen, and the like. The layout information may be considered, for example, as a template of the screen.

The user interface component is a component for realizing a user interface. The user interface can be said to be software for transmitting an instruction from an interpreter to the computer of the second terminal apparatus 4a or for transmitting output from the computer of the second terminal apparatus 4a to an interpreter.

The component is an element displayed on the screen of the second terminal apparatus 4a (which may be hereinafter referred to as an "object"), and can be said to be image data of an object for accepting an instruction from an interpreter or displaying output from a computer. The component is, for example, a button for accepting an instruction from an interpreter, a menu having one or at least two menu items, a region for displaying output from a computer, or the like, but there is no limitation on the type thereof as long as it is an element displayed on the screen.

The instruction from an interpreter is, for example, designation of a language, a mute instruction, a volume operation, or the like, but may also be an instruction to start interpretation, an instruction to start a waiting state, or the like, and there is no limitation on the type thereof. The designation of a language is designating a language of text that is displayed on the screen of the second terminal apparatus 4a. The designation of a language is, for example, designating the first language text or one of the one or more pieces of second language text.

The mute instruction is an instruction to mute speech interpreted by an interpreter. The muting can be said to be turning off the sound of speech interpreted by an interpreter or setting the volume close to 0. The muting is realized by, for example, turning off the microphone of the second terminal apparatus 4a. The muting can also be realized by, for example, stopping transmission of output from the microphone to the server apparatus 10, and there is no limitation on the realization method, as long as the sound of speech interpreted by an interpreter can be turned off as a result of the method.

The volume operation is an operation that sets the volume of speech that is output or input. The speech that is output is speech that is output via a speaker device of the second terminal apparatus 4a. The speaker device may also be a headphone. The speech that is output via a speaker device of the second terminal apparatus 4a is typically first language speech produced by a speaker, but may also contain noise and the like at the venue.

The speech that is input is speech that is input via the microphone of the second terminal apparatus 4a. The speech that is input via the microphone of the second terminal apparatus 4a is typically second language speech produced by a speaker, but may also contain noise such as a coughing sound of an interpreter.

The volume operation may be, for example, a volume operation (e.g., an operation that adjusts the amplification factor of an amplifier connected to the speaker device, etc.) on first language speech that is output via the speaker device, or may be a volume operation (e.g., an operation that adjusts the sensitivity of the microphone, etc.) on second language speech that is input via the microphone.

The user interface component is specifically, for example, a mute button, a volume operation component, a text display region, or the like, but there is no limitation on the type thereof.

The mute button is a button for muting speech interpreted by an interpreter. For example, if an interpreter operates the mute button displayed on the screen of the second terminal apparatus 4a, the second terminal accepting unit 42 of the second terminal apparatus 4a accepts the operation, and the second terminal processing unit 45 turns off the microphone. Accordingly, speech interpreted by an interpreter that is input via the microphone is muted. Accordingly, an interpreter who is currently performing interpretation can avoid input of a coughing sound, for example, by operating the mute button immediately before coughing.

For example, the mute button may also function as a button for unmuting. That is to say, it is preferable that, if the mute button is operated again in a state in which speech interpreted by an interpreter is muted through an operation of the mute button, the second terminal processing unit 45 cancels the mute state. It is also possible that the button for unmuting is a button different from the mute button.

The volume operation component is a component for a volume operation on speech that is output or input. The volume operation component has, for example, a slide bar, a language designation button, a volume indicator, or the like, but there is no limitation on the configuration thereof. The slide bar is a component that is constituted by a bar and a slider that slides along the bar, and can set the volume in accordance with the position of the slider relative to the bar.

The language designation button is a button for designating the first language or one of the one or more second languages. The language designation button includes, for example, three or more buttons respectively corresponding to the first language and the one or more second languages. The button corresponding to the first language includes a character string for specifying the first language. The character string for specifying the first language may be, for example, a language name such as "English", a character string such as "Floor" indicating a place in which the first language is spoken, or a character string such as "original" in a language in which a speaker speaks, and there is no limitation on the form thereof.

The language designation button is typically used to designate a language that is subjected to a volume operation by the volume operation component. The language designation button may also be used to designate a language of text that is displayed in the text display region. That is to say, both of a language that is subjected to a volume operation and a language of text that is displayed in the text display region may be changed together through a single time of operation on the language designation button.

That is to say, for example, it is also possible that, if the accepting unit 100 accepts an operation on the language designation button contained in the screen of the second terminal apparatus 4a, the screen information configuring unit 1031 configures screen information of a screen on which both of a language that is subjected to a volume operation by the volume operation component and a language of text that is displayed in the text display region have been changed.

Furthermore, for example, it is also possible that a language designation button is also provided in the text display region, and, if the accepting unit 100 accepts an operation that designates one language via either the language designation button constituting the volume operation component or the language designation button provided in the text display region, the screen information configuring unit 1031 configures screen information of a screen on which a language that is subjected to a volume operation and a language of text that is displayed in the text display region have been changed to the designated one language.

Accordingly, for example, if the interpreter designates the first language using the language designation button on the screen of the second terminal apparatus 4a and then operates the slide bar, the volume of the first language speech that is output via a speaker device of the second terminal apparatus 4a is changed. Accordingly, for example, if the first language speech that is being output is difficult to hear, the interpreter can increase the volume of the first language speech, by designating the first language using the language designation button, and operating the slide bar.

Furthermore, for example, if the interpreter designates one of the one or more second languages using the language designation button (typically, the second language that the interpreter speaks) and then operates the slide bar, the volume of the second language speech that is input via the microphone of the second terminal apparatus 4a is changed. Accordingly, for example, if a character string indicating that the second language speech is difficult to hear is displayed in a later-described first chat region, the interpreter who is performing interpretation can increase the volume of the second language speech, by designating the second language in which the interpreter is speaking, using the language designation button, and operating the slide bar.

Furthermore, for example, it is also possible that, if this sort of operation on the language designation button is accepted, the screen information configuring unit 1031 configures screen information of a screen on which a language of text displayed in a later-described text display region has also been changed to the designated language. Accordingly, the interpreter can see text in the designated language with ease.

The text display region is a region in which text is displayed on the screen, or a component such as a frame that defines the region. The text that is displayed is text for interpretation or of an interpretation result. The text for interpretation is typically first language text, but, for example, it may be a second language character string or the like indicating the meaning of a word designated in the first language text, and any text is possible as long as it is text for use in interpretation. The designated word is, for example, a word pointed with a cursor, but there is no limitation on the designation method.

The text of an interpretation result is typically second language text, but, for example, it may be a first language character string (i.e., expression of an interpreted word in the original language) or the like corresponding to a word designated in the second language text, and any text is possible as long as it is text regarding an interpretation result.

Specifically, for example, a user interface component group including a video display region, an interpreter image display region, a text display region, two or more first chat regions, a second chat region, an operation region, and the like, and layout information regarding the user interface component group are stored in the storage unit 101.

The video display region is a region in which a video obtained by capturing an image at a venue is displayed. The interpreter image display region is a region in which two or more interpreter images are displayed.

The operation region is a region of one or more operable objects that accept an operation of an interpreter. The operable objects are, for example, a mute button, a volume operation component, and the like. For example, two mute buttons, a volume operation component, and the like are arranged in the operation region.

Typically, language identifiers are respectively associated with the two or more first chat regions, the text display region, and the volume operation component of the user interface component group. Typically, no language identifier is associated with the other user interface components, but language identifiers may be associated therewith. The state in which a language identifier is associated therewith encompasses, for example, a state in which a user interface component has a language identifier such as a language name.

The video display region is positioned in an upper portion of the screen, and the operation region is positioned in a lower portion of the screen. The layout information contains, for example, pair information 1, which is a pair of a component identifier for identifying a video display region and positional information regarding a position of the video display region on the screen, and pair information 2, which is a pair of a component identifier for identifying an operation region and positional information regarding a position of the operation region on the screen, and, for example, the screen information configuring unit 1031 configures screen information of a screen on which the operation region is positioned in a lower portion of the screen and the video display region is positioned in an upper portion of the screen, using the two pairs of information 1 and 2.

Furthermore, the two mute buttons are respectively positioned on a lower left side of the screen and a lower right side of the screen. The layout information contains pair information 3, which is a pair of a component identifier for identifying one mute button and positional information regarding a position of the one mute button on the screen, and pair information 4, which is a pair of a component identifier for identifying the other mute button and positional information regarding a position of the other mute button on the screen, and, for example, the screen information configuring unit 1031 configures screen information of a screen on which the two mute buttons are respectively positioned on a lower left side of the screen and a lower right side of the screen, using the two pieces of positional information 1 and 2.

Furthermore, for example, it is also possible that the screen information configuring unit 1031 configures screen information having two or more types of user interface components corresponding to language identifiers. That is to say, for example, the screen information configuring unit 1031 configures an initial screen on which two or more interface components are arranged at positions specified with the layout information, using the two or more interface components out of the two or more interface components stored in the storage unit 101 and the layout information stored in the storage unit 101.

Then, the screen information configuring unit 1031 performs display in the one or more interface components contained in the initial screen such that the first language text acquired by the first language text acquiring unit 133 is displayed in the text display region, the pieces of chat information received, by the chat receiving unit 1021 from the two or more terminal apparatuses 2a, in pairs with the language identifiers, are respectively displayed in the two or more first chat regions associated with the language identifiers, and chat information received by the chat receiving unit 1021 from the one or more second terminal apparatuses 4a is displayed in the second chat region. Accordingly, the screen as described above is configured.

It is also possible that the screen information is a group of a video for configuring a screen, two or more interpreter images, one or more interface components, layout information, and the like. That is to say, for example, it is also possible that the screen information configuring unit 1031 configures screen information containing the video accepted by the video accepting unit 1001, two or more interpreter images contained in the two or more pieces of interpreter information constituting the interpreter information group stored in the interpreter information group storage unit 112a, one or more interface components out of the two or more interface components stored in the storage unit 101, and the layout information stored in the storage unit 101. In this case, in each of the second terminal apparatuses 4a, the second terminal processing unit 45 configuring a screen using the screen information.

Furthermore, for example, it is also possible that the screen information configuring unit 1031 configures a screen containing two or more interpreter images with a clarity that is low enough to satisfy a predetermined condition.

An image with a low clarity is an image whose details are difficult to see, and, for example, it can be said to be a coarse image. An image with a low clarity is typically an image with a low resolution. The resolution may be considered, for example, as the number of pixels. If an image is dark, the details become difficult to see even with the same resolution, and thus an image with a low clarity may also be, for example, a dark image. Alternatively, an image with a low clarity may also be, for example, an image with a high compression ratio, and there is no limitation on the type thereof as long as it is an image whose details are difficult to see.

The predetermined condition is, for example, a condition that "a resolution is not greater than a threshold". Alternatively, the predetermined condition may be, for example, "a brightness is not greater than a threshold", "a compression ratio is at a threshold or more", or the like, and any condition is possible as long as it is a condition regarding the lowness of clarity.

Specifically, the screen information configuring unit 1031 performs processing that lowers the clarity on the stored two or more interpreter images, thereby configuring a screen containing two or more interpreter images with a clarity that is low enough to satisfy a predetermined condition. The processing that lowers the clarity is typically processing that lowers the resolution (e.g., that changes the size with a smaller number of pixels), but, for example, it may be processing that lowers the brightness or processing that increases the compression ratio, and any processing is possible as long as the clarity is lowered as a result of the processing.

That is to say, for example, the screen information configuring unit 1031 performs processing that lowers the resolution on the stored two or more interpreter images, thereby configuring a screen containing two or more interpreter images with a clarity that is low enough to satisfy the predetermined condition "resolution is not greater than a threshold".

Furthermore, for example, it is also possible that the screen information configuring unit 1031 performs one or more of processing that lowers the resolution, processing that lowers the brightness, and processing that increases the compression ratio, on the stored two or more interpreter images, thereby configuring a screen containing two or more interpreter images with a clarity that is low enough to satisfy one or more of the predetermined three conditions "a resolution is not greater than a threshold", "a brightness is not greater than a threshold", or "a compression ratio is at a threshold or more".

The processing that lowers the clarity is not necessary for an interpreter image with a clarity that is originally low enough to satisfy a predetermined condition. That is to say, it is also possible that the screen information configuring unit 1031 determines whether or not the clarity of the stored two or more interpreter images is low enough to satisfy a predetermined condition, wherein the processing that lowers the clarity is performed only on interpreter images whose determination result is negative, and the processing that lowers the clarity is not performed on interpreter images whose determination result is positive.

Furthermore, for example, it is also possible that the screen information configuring unit 1031 configures a screen containing a video accepted by the video accepting unit 1001 and two or more interpreter images such that an interpreter image of an interpreter who is currently performing interpretation and an interpreter image of an interpreter who is not currently performing interpretation can be visually distinguished from each other, using the state information contained in the two or more pieces of interpreter information constituting the interpreter information group.

The state of being capable of being visually distinguished is a state in which there is a visible difference between an interpreter image of an interpreter who is performing interpretation and an interpreter image of an interpreter who is not performing interpretation, so that interpreters can distinguish these two types of images from each other. The visible difference is, for example, whether or not an image is emphasized. The emphasizing is, for example, enlarging, but may also be adding a frame, deforming, coloring, changing the background, or the like, and there is no limitation on the type thereof. Whether or not an image is emphasized is typically emphasizing only images of interpreters who are performing interpretation and not emphasizing images of interpreters who are not performing interpretation, but may also be emphasizing only images of interpreters who are not performing interpretation and not emphasizing images of interpreters who are performing interpretation.

Furthermore, the visible difference may also be a difference in the image quality. The difference in the image quality is, for example, lowering only the image quality of images of interpreters who are not performing interpretation and not lowering the image quality of images of interpreters who are performing interpretation, but may also be increasing only the image quality of images of interpreters who are performing interpretation and not increasing the image quality of images of interpreters who are not performing interpretation. The lowering the image quality is, for example, graying out, but may also be lowering the brightness or the like. The increasing the image quality is, for example, increasing the brightness, but may also be increasing the contrast or the like.

Specifically, for example, the screen information configuring unit 1031 configures a screen containing a video and two or more interpreter images such that an interpreter image of an interpreter who is currently performing interpretation and an interpreter image of an interpreter who is not currently performing interpretation can be visually distinguished from each other, by performing the emphasizing processing only on images of interpreters corresponding to the state information "interpreting" and not performing the emphasizing processing on images of interpreters corresponding to the s state information "not interpreting".

Furthermore, for example, it is also possible that the screen information configuring unit 1031 configures a screen containing a video and two or more interpreter images such that an interpreter image of an interpreter who is currently performing interpretation and an interpreter image of an interpreter who is not currently performing interpretation can be visually distinguished from each other, by performing the image quality lowering processing only on images of interpreters corresponding to the state information "not interpreting" and not performing the image quality lowering processing on images of interpreters corresponding to the state information "interpreting".

Of an interpreter who is performing interpretation and an interpreter who is not performing interpretation as described above, the latter interpreter may be divided into, for example, interpreters who are ready to perform interpretation (i.e., interpreters who are in a waiting state) and interpreters who are not ready to perform interpretation (i.e., interpreters who are in a preparing state).

In this case, for example, it is also possible that the screen information configuring unit 1031 configures a screen containing a video and two or more interpreter images such that an interpreter image of an interpreter who is currently performing interpretation, an interpreter image of an interpreter who is currently ready to perform interpretation, and an interpreter image of an interpreter who is not currently ready to perform interpretation can be visually distinguished from each other, by performing the enlarging processing on images of interpreters corresponding to the state information "interpreting", performing the frame adding processing on images of interpreters corresponding to the state information "waiting", and not performing either the enlarging processing or the frame adding processing on images of interpreters corresponding to the state information "waiting". There is no limitation on whether or not processing is performed on the interpreter images or the type of processing, as long as the three states can be distinguished from each other.

Furthermore, for example, it is also possible that the screen information configuring unit 1031 configures screen information of a screen containing one or more of a first chat region and a second chat region, the screen being a screen on which the chat information received by the chat receiving unit 1021 is displayed in the chat regions. The first chat region is a region for having a chat with the terminal apparatuses 2a of users. The second chat region is a region for having a chat with the second terminal apparatuses 4a of staff members.

Specifically, for example, the screen information configuring unit 1031 configures an initial screen containing one or more of a first chat region and a second chat region. A later-described display unit 1032 displays the chat information received by the chat receiving unit 1021 in the chat regions of the initial screen, so that screen information of a screen on which the chat information received by the chat receiving unit 1021 is displayed in the chat regions is configured.

Furthermore, for example, it is also possible that a later-described display unit 1032 displays a file identifier contained in a file received by the file receiving unit 1022 in the chat regions of the screen, so that the screen information configuring unit 1031 configures screen information of a screen on which the file identifier is displayed in the chat regions.

The chat with users may be performed in two or more languages. That is to say, for example, it is also possible that the screen information configuring unit 1031 configures screen information of a screen having two or more first chat regions, which are chat regions respectively corresponding to two or more language identifiers. The configured screen information has, for example, a screen having two or more first chat regions, and two or more pieces of pair information. The pair information indicates a pair of a component identifier for identifying a first chat region and a language identifier.

Specifically, for example, information such as two or more first chat regions, layout information regarding the two or more first chat regions, and two or more pieces of pair information as described above is stored in the storage unit 101, and, for example, the screen information configuring unit 1031 configures an initial screen containing two or more first chat regions associated with the language identifier, using the stored information. A later-described display unit 1032 displays the chat information received by the chat receiving unit 1021 in a pair with the language identifier in the two or more chat regions of the initial screen, so that the screen information configuring unit 1031 can configure screen information of a screen on which the chat information received by the chat receiving unit 1021 is displayed in the chat regions.

In a similar manner, for example, it is also possible that the screen information configuring unit 1031 configures an initial screen containing a text display region, and displays the first language text acquired by the first language text acquiring unit 133 in the text display region of the initial screen, thereby configuring screen information of a screen containing first language text.

Furthermore, for example, it is also possible that, in a state in which the thus configured screen containing first language text is displayed, if the accepting unit 100 accepts an operation that designates one second language out of the one or at least two second language using a language designation button, the screen information configuring unit 1031 configures screen information of a screen on which language of text displayed in the text display region has been changed from the first language to the designated one second language.

Furthermore, it is also possible that the screen information configuring unit 1031 configures screen information having two or more types of user interface components corresponding to language identifiers, and, in a case in which an instruction to determine a language identifier is accepted from the second terminal apparatuses 4a for any of the two or more types of user interface components, the screen information configuring unit configures screen information such that a current language of all of the two or more types of user interface components is a language identified with the language identifier corresponding to the instruction.

The two or more types of user interface components are a user interface component for a volume operation (e.g., the above-described a volume operation component, etc.) and a user interface component for a display region of text for interpretation or of an interpretation result (e.g., the above-described text display region, etc.). The text display region and the volume operation component may be provided with, for example, two or more tabs on which language identifiers such as "English" and "Japanese" are respectively written.

The current language is a language that is chosen at the current point in time. The current language may be, for example, a language of text currently displayed in the text display region, or a language of speech that is subjected to an operation of a volume operation component. Alternatively, the current language may be considered, for example, as a language written on a tab that has been chosen out of the two or more tabs provided on one user interface component. The tab that has been chosen may be, for example, a tab located in the front, or a colored tab, and there is no limitation on the form thereof.

For example, if a tab on which the language identifier "English" is written is chosen by an interpreter out of the two or more tabs provided on the volume operation component side, a tab on which the language identifier "English" is written is automatically chosen as well out of the two or more tabs provided on the text display region side.

Accordingly, in the second terminal apparatuses 4a, it is possible to display a screen on which, in response to an instruction to determine a language identifier for any of the two or more types of user interface components, a current language of all of the two or more types of user interface components is changed.

The display unit 1032 displays the chat information received by the chat receiving unit 1021, in the chat region contained in the screen. The displaying may also be adding.

For example, the display unit 1032 displays the chat information received by the chat receiving unit 1021 in a pair with the language identifier, in the first chat region corresponding to the language identifier, among the two or more first chat regions contained in the screen. Alternatively, it is also possible that the display unit 1032 displays the chat information received by the chat receiving unit 1021, by itself not in a pair with the language identifier, in the second chat region contained in the screen.

Furthermore, for example, it is also possible that the display unit 1032 also displays a file identifier contained in the file received by the file receiving unit 1022, in the chat region contained in the screen.

For example, the display unit 1032 displays the file identifier of the file received by the file receiving unit 1022 in a pair with the language identifier, in the first chat region corresponding to the language identifier, among the two or more first chat regions contained in the screen. Alternatively, it is also possible that the display unit 1032 displays the file identifier of the file received by the file receiving unit 1022, by itself not in a pair with the language identifier, in the second chat region contained in the screen.

Specifically, for example, correspondence information, which is a group of pairs of a language identifier and a terminal identifier, and chat region information are stored in the storage unit 101. The language identifier is information for identifying a language of a user. There is no limitation on the language of a user, and examples thereof include Japanese and English. The language identifier is, for example, a language name such as "Japanese" or "English", but may also be an ID or the like, and any information is possible as long as a language can be identified.

The terminal identifier is information for identifying a terminal apparatus 2a of a user. The terminal identifier is, for example, a MAC address, an IP address, or the like, but may also be an ID or the above-described user identifier, and any information is possible as long as the terminal apparatus 2a of a user can be identified.

The chat region information is information for specifying a chat region on the screen. The chat region information is, for example, an ID, but may also be coordinates, and any information is possible as long as a chat region can be specified. The coordinates are, for example, "(x1, y1), (x2, y2)" for specifying the start point and the end point of a rectangle, but there is no limitation on the form thereof.

For example, the display unit 1032 can display the chat information received by the chat receiving unit 1021 in a pair with the language identifier, in the first chat region corresponding to the language identifier, among the two or more first chat regions contained in the screen, using the stored correspondence information. The display unit 1032 can also display the file identifier of the file received by the file receiving unit 1022 in a pair with the language identifier, in the first chat region corresponding to the language identifier, among the two or more first chat regions contained in the screen, using the stored correspondence information.

Furthermore, for example, the display unit 1032 also displays the chat information received in a pair with the language identifier or the file identifier contained in the file received in a pair with the language identifier, also on the screens of the one or more terminal apparatuses 2a corresponding to the language identifier.

The transmitting unit 104 transmits various types of information. The various types of information are, for example, first language speech, first language text, second language speech, second language text, a translation result, screen information, user screen information, and a file, or the like.

For example, it is also possible that, if a file identifier displayed on the screen is chosen on one terminal apparatus 2a, the transmitting unit 104 acquires a file identified with the file identifier from the storage unit 101, and transmits it to the one terminal apparatus 2a. For example, it is also possible that, if a file identifier displayed on the screen is chosen on a second terminal apparatus 4a different from one second terminal apparatus 4a to which a file was transmitted, the transmitting unit 104 transmits the file to the different second terminal apparatus 4a.

The distributing unit 14a performs an operation similar to that performed by the distributing unit 14 in Embodiment 1. That is to say, the distributing unit 14a distributes second language speech and the like acquired by the second language speech acquiring unit 132, to the one or more terminal apparatuses 2a, using the user information group stored in the user information group storage unit 113.

Furthermore, the distributing unit 14a also performs an operation that distributes the first language speech acquired by the first language speech acquiring unit 131, to the one or more second terminal apparatuses 4a, using the interpreter information group stored in the interpreter information group storage unit 112a. That is to say, for example, the distributing unit 14a distributes the first language speech acquired by the first language speech acquiring unit 131, to the one or at least two second terminal apparatuses 4a corresponding to the one or at least two interpreter identifiers contained in the stored interpreter information group.

the screen information transmitting unit 1041 transmits the screen information configured by the screen information configuring unit 1031, to the one or at least two second terminal apparatuses 4a, using the interpreter information group stored in the interpreter information group storage unit 112a.

That is to say, for example, the screen information transmitting unit 1041 transmits the screen information configured by the screen information configuring unit 1031, to the one or at least two second terminal apparatuses 4a corresponding to the one or at least two interpreter identifiers contained in the stored interpreter information group.

For example, information similar to that stored in the terminal storage unit 21 in Embodiment 1 (e.g., user information containing a user identifier, a main second language identifier, and the like) is stored in the terminal storage unit 21a constituting each terminal apparatus 2a, which is a terminal apparatus of a user. Typically, the main second language identifier in this embodiment is simply referred to as a language identifier.

For example, the terminal accepting unit 22a accepts an instruction or information similar to that accepted by the terminal accepting unit 22 in Embodiment 1. For example, the terminal accepting unit 22a also accepts chat information (e.g., "Could you speak a little louder?", etc.) from the user to an interpreter, and an operation that chooses a file identifier.

For example, the terminal transmitting unit 23a transmits an instruction or information similar to that transmitted by the terminal transmitting unit 23 in Embodiment 1. For example, the terminal receiving unit 24a also transmits the chat information accepted by the terminal accepting unit 22a, and information indicating that a file identifier has been chosen.

The terminal receiving unit 24a transmits information such as the chat information, in a pair with the terminal identifier stored in the terminal storage unit 21a. The terminal receiving unit 24a transmits the chat information in association with the language identifier.

For example, the terminal receiving unit 24a receives information similar to that received by the terminal receiving unit 24 in Embodiment 1. For example, the terminal receiving unit 24a also receives chat information from an interpreter to the user, and a file identifier. The chat information is transmitted in association with the language identifier.

For example, the terminal processing unit 25a performs processing similar to that performed by the terminal processing unit 25 in Embodiment 1. The terminal processing unit 25a also performs processing that displays the chat information and the file identifier received by the terminal receiving unit 24a, on the screen.

For example, a second terminal identifier and the like are stored in the second terminal storage unit 41 constituting each second terminal apparatus 4a, which is a terminal apparatus of an interpreter. The second terminal identifier is information for identifying a second terminal apparatus 4a. The second terminal identifier is, for example, a MAC address, an IP address, ID, or the like, but may also be an interpreter identifier. In this embodiment, it is assumed that an interpreter identifier is stored in the second terminal storage unit 41.

The second terminal accepting unit 42 accepts various types of information. The various types of information are, for example, an interpreter image, a mute instruction, a volume operation, chat information from the interpreter to a user, chat information from the interpreter to another interpreter user, an operation that inputs a file identifier to a chat region, or the like. For example, the second terminal accepting unit 42 may also accept an instruction to start interpretation and an instruction to start a waiting state.

The second terminal transmitting unit 43 transmits the information accepted by the second terminal accepting unit 42, in a pair with the second terminal identifier stored in the second terminal storage unit 41, to the server apparatus 10. The transmitted information does not have to be the same as the accepted information. For example, it is also possible that, if the second terminal accepting unit 42 accepts an instruction to start interpretation, the processing unit 103 generates state information indicating "interpreting", and the second terminal transmitting unit 43 transmits the generated state information.

The second terminal receiving unit 44 receives various types of information from the server apparatus 10. The various types of information are, for example, first language speech, screen information, chat information from a user to the interpreter, chat information from another interpreter to the interpreter (e.g., "Could you send me the documents?", etc.), a file identifier, or the like. One or more of the chat information and the file identifier may be part of the screen information.

The second terminal processing unit 45 performs various types of processing. The various types of processing are, for example, processing that converts the form of the accepted information into the form of the transmitted information, or the like.

For example, the second terminal processing unit 45 also performs processing that transmits an interpreter image captured by a camera of the second terminal apparatus 4a, in a pair with the interpreter identifier stored in the second terminal storage unit 41, via the second terminal transmitting unit 43 to the server apparatus 10.

Furthermore, for example, it is also possible that, if the second terminal accepting unit 42 accepts an instruction to start interpretation or an instruction to start a waiting state, the second terminal processing unit 45 also performs processing that acquires state information indicating "interpreting" or "waiting", and transmits the acquired state information, in a pair with the interpreter identifier, via the second terminal transmitting unit 43 to the server apparatus 10. For example, it is also possible that, if the second terminal apparatus 4a is turned on, state information indicating "preparing" is acquired and transmitted to the server apparatus 10 in a pair with the interpreter identifier.

Furthermore, for example, the second terminal processing unit 45 also performs processing that accepts one or at least two pieces of language volume information, which are each a pair of a language identifier and volume information, using a language designation button and a volume operation component, and transmits the accepted one or more pieces of language volume information via the receiving unit 102 to the server apparatus 10.

The second terminal output unit 46 outputs various types of information. The various types of information are, for example, the information received by the second terminal receiving unit 44.

For example, the second terminal output unit 46 outputs the received first language speech via a speaker device, and outputs the received screen information via a display screen. Accordingly, the second terminal accepting unit 42 outputs speech of a speaker from the speaker device, and displays a screen as described above on the display screen.

For example, it is also possible that, if the received screen information contains two or more user interface components, layout information, and the like, the second terminal output unit 46 arranges the two or more user interface components at positions on the screen indicated by the layout information, thereby configuring the screen, and displays the screen on the display screen.

The storage unit 101, the speaker information group storage unit 111, the interpreter information group storage unit 112a, the user information group storage unit 113, the terminal storage unit 21a, and the second terminal storage unit 41 are, for example, preferably non-volatile storage media, but can also be realized by volatile storage media. There is no limitation on the procedure in which information is stored in the storage unit 101 and the like.

The accepting unit 100, the video accepting unit 1001, the terminal accepting unit 22a, and the second terminal accepting unit 42 may be considered to include or to not include an input device. The accepting unit 100 and the like may be realized by driver software for an input device, a combination of an input device and driver software therefor, or the like.

The receiving unit 102, the chat receiving unit 1021, and the file receiving unit 1022, the terminal receiving unit 24a, and the second terminal receiving unit 44 are typically realized by wired or wireless communication parts, but may also be realized by broadcast receiving parts.

The processing unit 103, the first language speech acquiring unit 131, the second language speech acquiring unit 132, the first language text acquiring unit 133, the second language text acquiring unit 134, the translation result acquiring unit 135, the speech feature value correspondence information acquiring unit 136, the reaction acquiring unit 137, the learning module configuring unit 138, the evaluation acquiring unit 139, the screen information configuring unit 1031, the display unit 1032, the terminal processing unit 25a, the reproducing unit 251, and the second terminal processing unit 45 may be realized typically by MPUs, memories, or the like. Typically, the processing procedure of the processing unit 103 and the like is realized by software, and the software is stored in a storage medium. The processing procedure be realized also by hardware.

The transmitting unit 104, the distributing unit 14a, the screen information transmitting unit 1041, the terminal transmitting unit 23a, and the second terminal transmitting unit 43 are typically realized by wired or wireless communication parts, but may also be realized by broadcasting parts.

The second terminal output unit 46 may be considered to include or to not include an output device such as a display screen or a speaker device. The second terminal output unit 46 may be realized by driver software for an output device, a combination of an output device and driver software therefor, or the like.

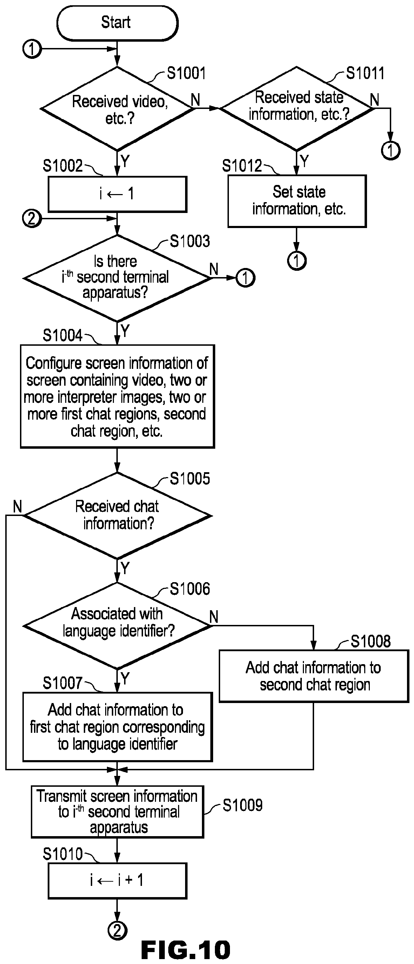

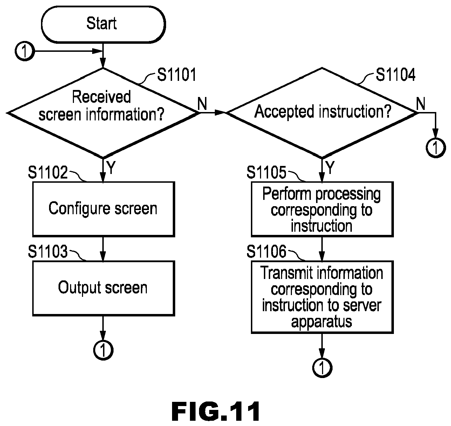

Next, an operation of the interpretation system in this embodiment will be described with reference to the flowcharts in FIGS. 10 and 11.

FIG. 10 is a flowchart illustrating an operation example of the server apparatus 10. The processing of this flowchart is based on the assumption that a language identifier is associated with chat information from the terminal apparatuses 2a, and no language identifier is associated with chat information from the second terminal apparatus 4a.

(Step S1001) The processing unit 103 determines whether or not the video accepting unit 1001 and the like have received a video and two or more interpreter images. If it is determined that the video accepting unit 1001 and the like have received a video and two or more interpreter images, the procedure advances to step S1002, or otherwise the procedure advances to step S1011.

(Step S 1002) The processing unit 103 sets a variable i to an initial value "1". The variable i is a variable for sequentially choosing second terminal apparatuses 4a that have not been chosen yet, among the two or more second terminal apparatuses 4a. The variable i may be considered, for example, as a variable for sequentially choosing two or more pieces of interpreter information stored in the interpreter information group storage unit 112a.

(Step S1003) The screen information configuring unit 1031 determines whether or not there is an i^{-th} second terminal apparatus 4a, with reference to the two or more pieces of interpreter information stored in the interpreter information group storage unit 112a. If it is determined that there is an 1^{-th} second terminal apparatus 4a, the procedure advances to step S1004, or otherwise the procedure returns to step S1001.

(Step S1004) The screen information configuring unit 1031 configures screen information of a screen containing the video and the two or more interpreter images received in step S1001, two or more first chat regions and a second chat region, chat information displayed in the chat regions, and the like, using the user interface component group stored in the storage unit 101, layout information regarding the group, and the chat information stored in the storage unit 101, and the like.

(Step S1005) The processing unit 103 determines whether or not the chat receiving unit 1021 has received chat information. If it is determined that the chat receiving unit 1021 has received chat information, the procedure advances to step S1006, or otherwise the procedure advances to step S1009. Although not shown, the processing unit 103 performs processing that accumulates the received chat information in the storage unit 101.

(Step S1006) The processing unit 103 determines whether or not a language identifier is associated with the chat information received in step S1005. If it is determined that a language identifier is associated with the received chat information, the procedure advances to step S1007, or otherwise the procedure advances to step S1008.

(Step S1007) The display unit 1032 adds the chat information received in step S 1005, to a first chat region corresponding to the language identifier associated with the chat information received in step S1005.

(Step S1008) The display unit 1032 adds the chat information received in step S1005 to a second chat region.

(Step S1009) The screen information transmitting unit 1041 transmits the screen information configured in step S1004 or screen information in which the chat information is displayed in the first or second chat region of the screen information in step S1007 or S1008, to the 1^{-th} second terminal apparatus 4a.

(Step S1010) The processing unit 103 increments the variable i. Then, the procedure returns to step S1003.

(Step S1011) The processing unit 103 determines whether or not the receiving unit 102 has received state information, language volume information, and the like in a pair with the interpreter identifier. If it is determined that the receiving unit 102 has received state information, language volume information, and the like in a pair with the interpreter identifier, the procedure advances to step S1012, or otherwise the procedure returns to step S1001.

(Step S1012) The processing unit 103 sets the state information, the language volume information, and the like received in step S1011, to interpreter information corresponding to the interpreter identifier received in a pair with the state information or the like. Accordingly, current state information, language volume information, and the like contained in the interpreter information are updated to the new state information, language volume information, and the like received in step S1011. Then, the procedure returns to step S1003.

In the flowchart in FIG. 10, it is also possible that, when configuring screen information in step S1004, the screen information configuring unit 1031 configures screen information such that, for example, an interpreter image of an interpreter who is performing interpretation, an interpreter image of an interpreter who is in a waiting state, and an interpreter image of an interpreter who is in a preparing state can be visually distinguished from each other, using the interpreter information group stored in the interpreter information group storage unit 112a.

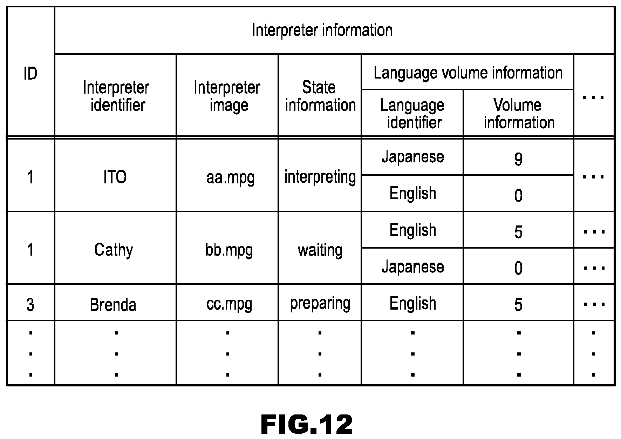

Furthermore, in the flowchart in FIG. 10, it is also possible that, when configuring screen information in step S1004, the screen information configuring unit 1031 configures screen information such that, for example, a volume operation component is in a mode corresponding to the language volume information set by the interpreter corresponding to the 1^{-th} second terminal apparatus 4a, using one or more pieces of language volume information (see FIG. 12, which will be described later) contained in the interpreter information corresponding to the i^{-th} second terminal apparatus 4a, among the interpreter information constituting the interpreter information group stored in the interpreter information group storage unit 112a.

Accordingly, as a result of update of the state information, the language volume information, and the like in step 1012, the modes of the user interface components such as two or more interpreter images or a volume operation component on the screen are visually changed.

Furthermore, in the flowchart in FIG. 10, the processing started when the server apparatus 10 is turned on or a program is started, and the processing is ended when the apparatus is turned off or at an interruption of termination processing. There is no limitation on a trigger to start or end the processing.

FIG. 11 is a flowchart illustrating an operation example of the second terminal apparatus 4a.

(Step S1101) The second terminal processing unit 45 determines whether or not the second terminal receiving unit 44 has received screen information. If it is determined that the second terminal receiving unit 44 has received screen information, the procedure advances to step S1102, or otherwise the procedure advances to step S1104.

(Step S1102) The second terminal processing unit 45 configures a screen, using the screen information received in step S1101.

(Step S1103) The second terminal output unit 46 outputs the screen configured in step S1101. Then, the procedure returns to step S1101.

(Step S1104) The second terminal processing unit 45 determines whether or not the second terminal accepting unit 42 has accepted an instruction. The instruction is, for example, designation of a language, a mute instruction, a volume operation, or the like, but may also be an instruction to start interpretation or an instruction to start a waiting state. If it is determined that the second terminal receiving unit 44 has received screen information, the procedure advances to step S1102, or otherwise the procedure advances to step S1104.

(Step S1105) The second terminal processing unit 45 performs processing corresponding to the instruction received in step S1104. The processing corresponding to the instruction is, for example, processing that switches a current language according to designation of a language, processing that mutes speech interpreted by an interpreter according to a mute instruction, processing that sets a volume according to a volume operation, or the like. Alternatively, the processing corresponding to the instruction is, for example, processing that changes state information indicating "waiting" or "preparing" to "interpreting" according to an instruction to start interpretation, processing that changes state information indicating "preparing" or "interpreting" to "waiting" according to an instruction to start a waiting state, or the like.

(Step S1106) The second terminal transmitting unit 43 transmits information corresponding to the instruction received in step S1104 to the server apparatus 10. The information corresponding to the instruction is, for example, a language identifier for identifying a designated language, information indicating that indicating a mute state, language volume information, or the like, but may also be state information indicating "interpreting", "waiting", or "preparing", and there is no limitation on the type thereof. Then, the procedure returns to step S1101.

It is not absolutely necessary to transmit information in step S1106.

Furthermore, in the flowchart in FIG. 11, the processing started when the second terminal apparatuses 4a is turned on or a program is started, and the processing is ended when the apparatus is turned off or at an interruption of termination processing. There is no limitation on a trigger to start or end the processing.

Hereinafter, a specific operation example of the interpretation system in this embodiment will be described. The interpretation system in this example includes a server apparatus 10, two or more terminal apparatuses 2a, a speaker apparatus 3, and two or more second terminal apparatuses 4a. The server apparatus 10 can communicate with each of the two or more terminal apparatuses 2a, the speaker apparatus 3, and the two or more second terminal apparatuses 4a via a network or the like. A camera for capturing an image at a venue is connected to the server apparatus 10 via a network or the like or directly in a wired or wireless manner.

For example, two or more pieces of interpreter information as shown in FIG. 12 may be stored in the interpreter information group storage unit 112a of the server apparatus 10. The interpreter information has, for example, an interpreter identifier, an interpreter image, state information, one or at least two pieces of language volume information, and the like. The language volume information has a language identifier and volume information.

The interpreter information may also have, for example, an evaluation value and the like described in Embodiment 1. If one interpreter information only has one piece of language volume information, the language identifier constituting the language volume information may be, for example, the second language identifier in Embodiment 1. Furthermore, if one interpreter information has two pieces of language volume information, the language identifier constituting a first piece of language volume information may be, for example, the second language identifier in Embodiment 1, and the language identifier constituting a second piece of language volume information may be, for example, the first language identifier in Embodiment 1.

IDs (e.g., "1", "2", etc.) are associated with the stored interpreter information. For example, the interpreter information (which may be hereinafter referred to as "interpreter information 1") associated with the ID "1" has an interpreter identifier "ITO", an interpreter image "aa.mpg", state information "interpreting", two pieces of language volume information "(Japanese, 9)" and "(English, 0)", and the like. The interpreter information (interpreter information 2) associated with the ID "2" has an interpreter identifier "Cathy", an interpreter image "bb.mpg", state information "waiting", two pieces of language volume information "(English, 5)" and "(Japanese, 0)", and the like. In a similar manner, interpreter information 3 has an interpreter identifier "Brenda", an interpreter image "cc.mpg", state information "preparing", language volume information "(English, 5)", and the like.

The state information of all of the three pieces of interpreter information 1 to 3 is initially "preparing". The two pieces of language volume information contained in the interpreter information 1 are initially "(Japanese, 5)" and "(English, 0)".

user interface component group including a video display region, an interpreter image display region, a text display region, two first chat regions, two second chat regions, an operation region, and the like, and layout information regarding the user interface component group are stored in the storage unit 101.

A chat region at the first order, of the two second chat regions, is for having a chat between an interpreter who is performing interpretation and an interpreter who is in a waiting state, and this chat region at the first order will be hereinafter simply referred to as a "second chat region".

In one or more of the two or more terminal apparatuses 2a, a second language speech is chosen and it is possible to have a chat in the second language with the second terminal apparatuses 4a. In the other one or more of the two or more terminal apparatuses 2a, a first language speech is chosen and it is possible to have a chat in the first language with the second terminal apparatuses 4a.

One apparatus (hereinafter, referred to as a "second terminal apparatus 4aX") of the two or more second terminal apparatuses 4a is a terminal apparatus of a first interpreter "ITO", another apparatus (a second terminal apparatus 4aY) is a terminal apparatus of a second interpreter "Cathy", and another apparatus (a second terminal apparatus 4aZ) is a terminal apparatus of a third interpreter "Brenda".

The interpreter identifier "ITO" is stored in the second terminal storage unit 41 of the second terminal apparatus 4aX, the interpreter identifier "Cathy" is stored in the second terminal storage unit 41 of the second terminal apparatus 4aY, and the interpreter identifier "Brenda" is stored in the second terminal storage unit 41 of the second terminal apparatus 4aZ.

It is assumed that "ITO" who performs interpretation first inputs an instruction to start interpretation via an input device such as a touch panel contained in the second terminal apparatus 4aX. In the second terminal apparatus 4aX, the second terminal receiving unit 44 accepts this instruction, the second terminal processing unit 45 generates state information indicating "interpreting", and the second terminal transmitting unit 43 transmits the generated state information, in a pair with the interpreter identifier "ITO", to the server apparatus 10.

In the server apparatus 10, the receiving unit 102 receives this state information in a pair with the interpreter identifier "ITO", and the processing unit 103 sets the state information 1 corresponding to the interpreter identifier "ITO" to the received state information. Accordingly, the state information contained in the interpreter information 1 is updated from "preparing" to" interpreting".

Furthermore, it is assumed that "Cathy" who performs interpretation second inputs an instruction to start a waiting state via an input device of the second terminal apparatus 4aY. In the second terminal apparatus 4aY, the second terminal receiving unit 44 accepts this instruction, the second terminal processing unit 45 generates state information indicating "waiting", and the second terminal transmitting unit 43 transmits the generated state information, in a pair with the interpreter identifier "Cathy", to the server apparatus 10.

In the server apparatus 10, the receiving unit 102 receives this state information in a pair with the interpreter identifier "Cathy", and the processing unit 103 sets the state information 2 corresponding to the interpreter identifier "Cathy" to the received state information. Accordingly, the state information contained in the interpreter information 2 is updated from "preparing" to "waiting".

Then, if a camera is turned on and the video accepting unit 1001 accepts a video obtained by capturing an image at a venue from the camera, the screen information configuring unit 1031 configures screen information of an initial screen in which the user interface component group is arranged at the position indicated by the layout information, using the user interface component group and the layout information stored in the storage unit 101.

Next, the screen information configuring unit 1031 displays the accepted video, in a video display region contained in the configured initial screen. The screen information configuring unit 1031 acquires two or more interpreter images "aa.jpg", "bb.jpg", "cc.jpg", and the like using the two or more pieces of interpreter information 1 to 3 and the like stored in the interpreter information group storage unit 112a, and displays the acquired two or more interpreter images in the interpreter image display region contained in the initial screen. Accordingly, screen information of a screen is configured on which the video obtained by capturing an image at the venue is displayed in the video display region, and the two or more interpreter images are displayed in the interpreter region.

At that time, it is seen from the stored interpreter information 1 to 3 that the state information corresponding to the interpreter identifier "ITO" is" interpreting", the state information corresponding to the interpreter identifier "Cathy" is "waiting", and the state information corresponding to the interpreter identifier "Brenda" is "preparing", and thus the screen information configuring unit 1031 configures screen information in which the interpreter image "aa.mpg" corresponding to interpreter identifier "ITO" is enlarged and the interpreter image "bb.mpg" corresponding to the interpreter identifier "ITO" is framed. Accordingly, screen configuring information of a screen is configured on which an interpreter who is currently performing interpretation and an interpreter who is not currently performing interpretation can be visually distinguished from each other. Also, screen configuring information of a screen is configured on which, among interpreters who are not currently performing interpretation, an interpreter who is ready to perform interpretation and an interpreter who is not ready to perform interpretation can be visually distinguished from each other.

At the venue, a speaker speaks in English, and two or more interpreters inside or outside the venue interpret the content spoken in English to Japanese. That is to say, in this example, the first language is English, and the second language is Japanese. In this example, for example, the two or more interpreters are in charge of interpretation from English to Japanese sequentially on a 15-minute rotation.

When the speaker starts to speak, the spoken speech is captured by a microphone of the speaker apparatus 3, and a speech signal output from the microphone is transmitted to the server apparatus 10. In the server apparatus 10, the receiving unit 102 receives the speech signal, and the first language speech acquiring unit 131 acquires first language speech from the received speech signal. The distributing unit 14a distributes the acquired first language speech to the two or more second terminal apparatuses 4a.

In the second terminal apparatus 4aX, the second terminal receiving unit 44 receives the first language speech, and the second terminal output unit 46 outputs the received first language speech. "ITO" listens to the output first language speech, and interprets it to the second language. The second terminal accepting unit 42 accepts second language speech the interpreted by the interpreter "ITO", and the second terminal transmitting unit 43 transmits the accepted second language speech to the server apparatus 10.

In the server apparatus 10, the second language speech acquiring unit 132 receives the second language speech via the receiving unit 102, and the distributing unit 14a distributes the second language speech to the two or more terminal apparatuses 2a.

In each of the two or more terminal apparatuses 2a, the terminal receiving unit 24a receives the first language speech and the second language speech. In one or more terminal apparatuses 2a in which the second language speech has been chosen among the two or more terminal apparatuses 2a, the second language speech out of the received first language speech and second language speech is output, and, in one or more terminal apparatuses 2a in which the first language speech has been chosen, the first language speech out of the received first language speech and second language speech is output.

It is assumed that a user of one terminal apparatus 2a among the one or more terminal apparatuses 2a in which the second language speech has been chosen inputs chat information "Could you speak a little louder?". In the one terminal apparatus 2a, the terminal accepting unit 22a accepts the chat information, and the terminal transmitting unit 23a transmits the accepted chat information, in a pair with a language identifier "Japanese" for identifying a chosen second language and a terminal identifier, to the server apparatus 10.

In the server apparatus 10, the chat receiving unit 1021 receives the chat information in a pair with the language identifier "Japanese" and the terminal identifier, the display unit 1032 displays the received chat information in the first chat region at the first order corresponding to the language identifier "Japanese", and the screen information configuring unit 1031 configures screen information of a screen on which the received chat information is displayed in the first chat region.

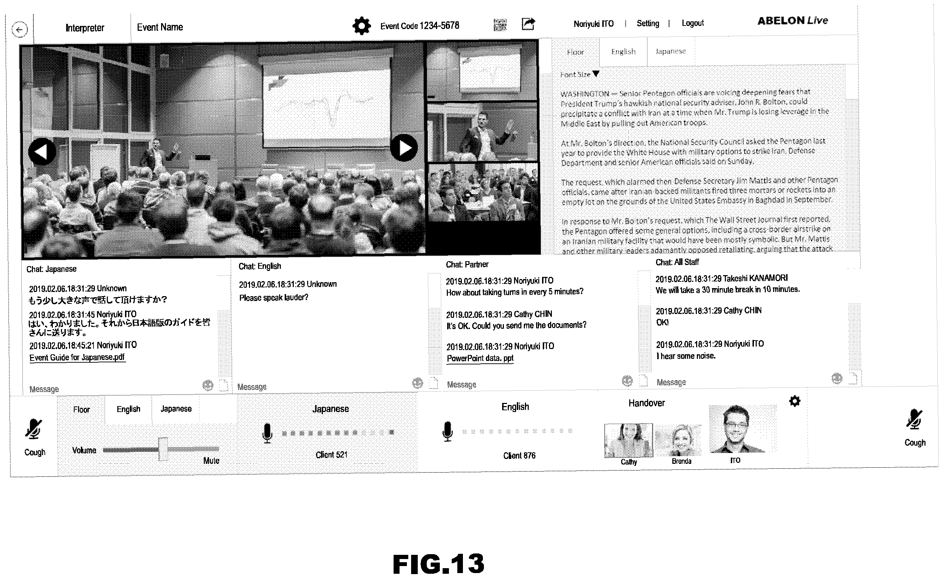

In this manner, for example, screen information of a screen as shown in FIG. 13 is configured. The screen information transmitting unit 1041 transmits the configured screen information to the second terminal apparatus 4aX.

The screen in FIG. 13 also displays one or more videos from one or more other cameras, next to the video from the above-mentioned camera, but the technique for displaying videos from two or more cameras on one screen is known, and thus a description thereof has been omitted. A second chat region at the second order (i.e., at the right end), of the two second chat regions, on the screen is a region for having a chat between all staff members including interpreters, but the technique for having a chat between three or more people is known, and thus a description thereof has been omitted. The other interface components (e.g., two left and right mute buttons, etc.) on the screen are as described above, and thus a description thereof will not be repeated.

In the second terminal apparatus 4aX, the second terminal receiving unit 44 receives the screen information, and the second terminal output unit 46 displays the received screen information on the display screen. The display screen of the second terminal apparatus 4aX displays a screen on which chat information "Could you speak a little louder?" is displayed in the first chat region corresponding to the language identifier "Japanese", of the two first chat regions.

It is assumed that "ITO" inputs a volume operation that changes the volume information corresponding to the language identifier "Japanese" from the current value "5" to "9", via a volume operation component on the screen that is displayed on the display screen of the second terminal apparatus 4aX.

In the second terminal apparatus 4aX, the second terminal accepting unit 42 accepts the volume operation, the second terminal processing unit 45 generates language volume information "(Japanese, 9)" having a pair of the language identifier "Japanese" and the volume information "9", and the second terminal transmitting unit 43 transmits the generated language volume information, that is paired with the interpreter identifier "ITO", to the server apparatus 10.

In the server apparatus 10, the receiving unit 102 receives the language volume information in a pair with the interpreter identifier "ITO", and the processing unit 103 updates the language volume information "(Japanese, 5)" at the first order having the language identifier "Japanese", of the two pieces of language volume information corresponding to the interpreter identifier "ITO", to the received language volume information "(Japanese, 9)".

The distributing unit 14a increase the volume of second language speech corresponding to the language identifier "Japanese" from "5" to "9", and distributes the first language speech at the volume "9" to the two or more terminal apparatuses 2a.

In the one terminal apparatus 2a to which the user input the chat information "Could you speak a little louder?", the terminal receiving unit 24a receives the first language speech at the volume "9", and the reproducing unit 251 reproduces the received first language speech. Accordingly, the first language speech at the volume "9" is output from the speaker device of the one terminal apparatus 2a.

An operation in the case in which, for example, "Cathy" who is an interpreter in a waiting state inputs chat information "Could you send me the documents?" via the input device of the second terminal apparatus 4aY is as follows.

In the second terminal apparatus 4aY, the second terminal accepting unit 42a accepts the chat information, and the second terminal transmitting unit 43 transmits the accepted chat information, in a pair with the interpreter identifier, to the server apparatus 10.

In the server apparatus 10, the chat receiving unit 1021 receives the chat information in a pair with the terminal identifier, the display unit 1032 displays the received chat information in the second chat region, and thus the screen information configuring unit 1031 configures screen information of a screen on which the received chat information is displayed in the second chat region. The screen information transmitting unit 1041 transmits the configured screen information to the second terminal apparatus 4aX.

In the second terminal apparatus 4aX, the second terminal receiving unit 44 receives the screen information, and the second terminal output unit 46 displays the received screen information on the display screen. The display screen of the second terminal apparatus 4aX displays a screen on which the chat information "Could you send me the documents?" is displayed in the second chat region.

It is assumed that "ITO" inputs a file identifier "PowerPoint data.ppt" to the second chat region via the input device of the second terminal apparatus 4aX.

In the second terminal apparatus 4aX, the second terminal accepting unit 42 accepts the file identifier, and the second terminal transmitting unit 43 transmits a file having the accepted file identifier, in a pair with the interpreter identifier "ITO", to the server apparatus 10.

In the server apparatus 10, the receiving unit 102 receives the file in a pair with the interpreter identifier "ITO", and the processing unit 103 accumulates the received file in the storage unit 101 in association with the interpreter identifier "ITO".

Next, the display unit 1032 displays the file identifier "PowerPoint data.ppt" in the second chat region, and thus the screen information configuring unit 1031 configures screen information of a screen on which the received chat information is displayed in the second chat region. The screen information transmitting unit 1041 transmits the configured screen information to the second terminal apparatus 4aY.

In the second terminal apparatus 4aY, the second terminal receiving unit 44 receives the screen information, and the second terminal output unit 46 displays the received screen information on the display screen. The display screen of the second terminal apparatus 4aY displays a screen on which file identifier "PowerPoint data.ppt" is displayed in the second chat region.

It is assumed that "Cathy" chooses the file identifier "PowerPoint data.ppt" via the input device of the second terminal apparatus 4aY.

In the second terminal apparatus 4aY, the second terminal accepting unit 42 accepts the choice of the file identifier, and the second terminal transmitting unit 43 transmits the information indicating that the file identifier has been chosen, in a pair with the interpreter identifier "Cathy", to the server apparatus 10.

In the server apparatus 10, the receiving unit 102 receives the information in a pair with the interpreter identifier "Cathy", and the processing unit 103 acquires the file identified with the file identifier "PowerPoint data.ppt" contained in the information, from the storage unit 101, and transmits the file to the second terminal apparatus 4aY

In the second terminal apparatus 4aY, the second terminal receiving unit 44 receives the file. Accordingly, transfer of a file between interpreters is realized.

As described above, with this embodiment, an interpreter information group having two or more pieces of interpreter information is stored in the interpreter information group storage unit 112a, the information containing an interpreter image, which is an image of an interpreter, and the server apparatus 10 accepts a video obtained by capturing an image at a venue, configures screen information for configuring a screen containing the accepted video and two or more interpreter images, and transmits the configured screen information to the second terminal apparatuses 4a of two or more interpreters, and thus it is possible to provide a mechanism for displaying a screen containing a video obtained by capturing an image at a venue and two or more interpreter images, on terminals of the two or more interpreters.

Furthermore, the server apparatus 10 configures a screen containing two or more interpreter images with a clarity that is low enough to satisfy a predetermined condition, and thus it is possible to display a screen on which each interpreter can be identified but the details thereof (e.g., the interpreter is wearing makeup, etc.).

Furthermore, the interpreter information has an interpreter identifier, one or more pieces of interpreter information among the two or more pieces of interpreter information have state information for specifying an interpreter who is currently performing interpretation or an interpreter who is not currently performing interpretation, and the server apparatus 10 configures a screen containing the accepted video and two or more interpreter images such that an interpreter image of an interpreter who is currently performing interpretation and an interpreter image of an interpreter who is not currently performing interpretation can be visually distinguished from each other, using the state information, and thus it is possible to display a screen on which, among two or more interpreters, which interpreter is performing interpretation can be seen.

Furthermore, the interpreter information has state information indicating any one of at least three states consisting of a state of being currently performing interpretation, a state of being ready to perform interpretation, and a state of not being ready to perform interpretation, and the server apparatus 10 configures a screen containing the accepted video and two or more interpreter images such that states of interpreters can be visually distinguished from each other, using the state information, and thus it is possible to display a screen on which, among two or more interpreters, which interpreter is performing interpretation and which interpreter performs interpretation next can be seen.

Furthermore, the server apparatus 10 receives chat information from the terminal apparatuses 2a or the second terminal apparatuses 4a, and configures screen information of a screen containing one or more of a first chat region for having a chat with the terminal apparatus 2a of a user and a second chat region for having a chat with the second terminal apparatus 4a of a staff member, the screen being a screen on which the received chat information is displayed in the chat regions, and thus it is possible to display a screen on which an interpreter can have a chat with one or more of a user and a staff member.

Furthermore, the interpreter information has two or more language identifiers for identifying two or more interpretable languages, and the server apparatus 10 configures screen information of a screen having two or more first chat regions, which are chat regions respectively corresponding to the two or more language identifiers, and thus it is possible to display a screen on which an interpreter can have a chat with users in two or more languages.

Furthermore, the server apparatus 10 configures screen information such that an operation region, which is a region of one or more operable objects that accept an operation of an interpreter is positioned in a lower portion of the screen, and the accepted video is positioned in an upper portion of the screen, and thus it is possible to display a screen that can be viewed and operated with ease.

Furthermore, the server apparatus 10 configures screen information such that two mute buttons for muting speech interpreted by an interpreter are respectively positioned on a lower left side of the screen and a lower right side of the screen, and thus it is possible to display a screen on which speech can be muted with ease regardless of whether the interpreter is right-handed or left-handed.

Furthermore, the interpreter information has volume information for specifying volumes set by an interpreter and respectively corresponding to two or more languages, in association with language identifiers, and speech in a language identified by each of the language identifiers is input in a volume specified with the volume information that is paired with the language identifier, to the second terminal apparatus 4a of the interpreter, and thus it is possible for the server apparatus 10 to display a screen on which an interpreter can set a volume for each of two or more languages.

Furthermore, the server apparatus 10 configures screen information having two or more types of user interface components corresponding to language identifiers, and, in a case in which an instruction to determine a language identifier is accepted from the second terminal apparatuses 4a for any of the two or more types of user interface components, the screen of the second terminal apparatuses 4a is changed such that a current language of all of the two or more types of user interface components is a language identified with the language identifier corresponding to the instruction, and thus and thus it is possible for the server apparatus 10 to display a screen on which, in response to an instruction to determine a language identifier for any of the two or more types of user interface components, a current language of all of the two or more types of user interface components is changed.

Furthermore, two or more types of user interface components are a user interface component for a volume operation and a user interface component for a display region of text for interpretation or of an interpretation result, and thus it is possible for the server apparatus 10 to display a screen on which, in response to an instruction to determine a language identifier for a user interface component for either a volume operation or text display, the current language is changed for user interface components for both a volume operation and text display.

The software that realizes the server apparatus 10 in this embodiment is, for example, the following sort of program. Specifically, this program is a program for causing a computer capable of accessing an interpreter information group storage unit in which an interpreter information group having two or more pieces of interpreter information is stored, the information containing an interpreter image, which is an image of an interpreter, to function as: a video accepting unit that accepts a video obtained by capturing an image at a venue; a screen information configuring unit that configures screen information for configuring a screen containing the video accepted by the video accepting unit and two or more interpreter images; and a screen information transmitting unit that transmits the screen information configured by the screen information configuring unit to second terminal apparatuses of two or more interpreters.

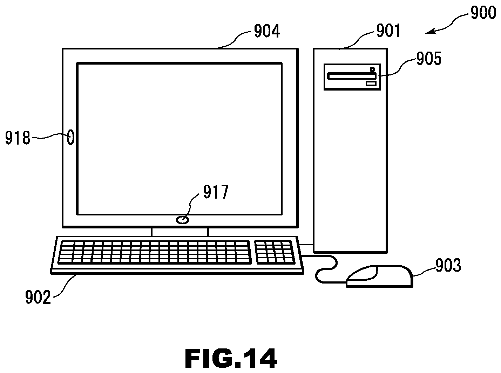

FIG. 14 an external view of a computer system 900 executes the programs according to the foregoing embodiments to realize the server apparatus 1 and the like. The foregoing embodiments may be realized using computer hardware and computer programs executed thereon. In FIG. 14, the computer system 900 includes a computer 901 including a disk drive 905, a keyboard 902, a mouse 903, a display screen 904, a microphone 917, and a speaker device 918. The entire system including the keyboard 902, the mouse 903, the display screen 904, the microphone 917, and the speaker device 918 may be referred to as a computer.

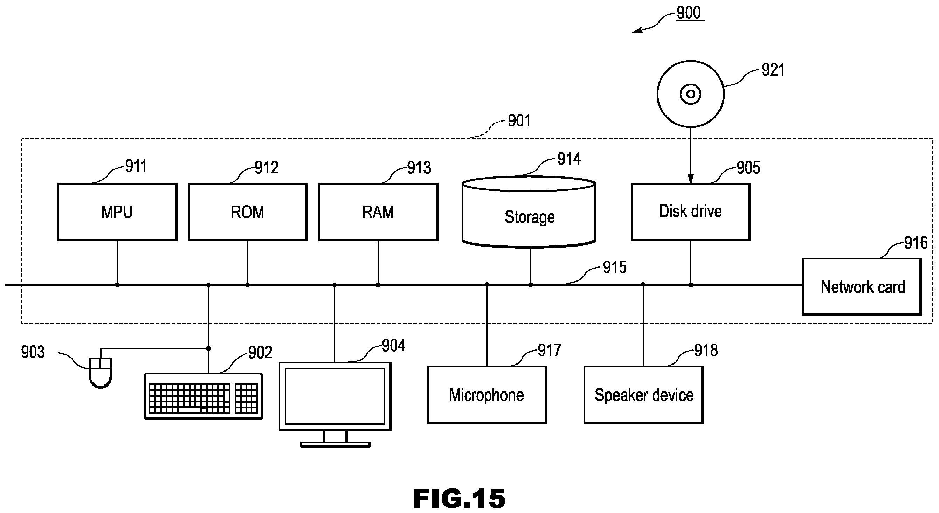

FIG. 15 is a diagram showing an internal configuration of the computer system 900. In FIG. 15, the computer 901 includes, in addition to the disk drive 905, an MPU 911, a ROM 912 in which a program such as a boot up program is to be stored, a RAM 913 that is connected to the MPU 911 and in which a command of an application program is temporarily stored and a temporary storage area is provided, a storage 914 in which an application program, a system program, and data are stored, a bus 915 that connects the MPU 911, the ROM 912, and the like, a network card 916 for providing a connection to networks such as an internal network or an external network, the microphone 917, and the speaker device 918. Note that the storage 914 is, for example, a hard disk, an SSD, a flash memory, or the like.

The program for causing the computer system 900 to execute the functions of the server apparatus 1 and the like may be stored in a disk 921 such as a DVD or a CD-ROM that is inserted into the disk drive 905 and be transferred to the storage 914. Alternatively, the program may be transmitted via a network to the computer 901 and stored in the storage 914. At the time of execution, the program is loaded into the RAM 913. The program may be loaded from the disk 921, or directly from a network. Furthermore, the program may be read by the computer system 900 via a removable storage medium other than the disk 921 (e.g., a DVD, a memory card, etc.).

The program does not necessarily have to include, for example, an operating system (OS) or a third party program to cause the computer 901 described in detail to execute the functions of the server apparatus 1 and the like. The program may only include a command portion to call an appropriate function or module in a controlled mode and obtain desired results. The manner in which the computer system 900 operates is well known, and thus a detailed description thereof has been omitted.

The computer system 900 described above is a server or a desktop PC, but the terminal apparatuses 2 may be realized, for example, by mobile terminals such as tablet devices, smartphones, laptops, and the like. In this case, it is desirable that, for example, the keyboard 902 and the mouse 903 are replaced by a touch panel, and the disk drive 905 is replaced by a memory card slot, and the disk 921 is replaced by a memory card. The speaker apparatuses 3 and the interpreter apparatuses 4 may have a basic hardware configuration that is similar to that of PCs or mobile terminals. Note that the description above is merely an example, and there is no limitation on the hardware configuration of the computer that realizes the server apparatus 1 and the like.

It should be noted that, in the programs, in a step of transmitting information, a step of receiving information, or the like, processing that is performed by hardware, for example, processing performed by a modem or an interface card in the transmitting step (processing that can be performed only by hardware) is not included.

Furthermore, the computer that executes this program may be a single computer, or may be multiple computers. That is to say, centralized processing using a single apparatus may be performed, or distributed processing using multiple apparatuses may be performed.

Furthermore, in the foregoing embodiments, it will be appreciated that two or more communication parts (the terminal information transmitting unit 23, the terminal receiving unit 24, etc.) in one apparatus may be physically realized by one medium.

In the foregoing embodiment, each process (each function) may be realized as centralized processing using a single apparatus (system), or may be realized as distributed processing using multiple apparatuses.

The present invention is not limited to the embodiment set forth herein. Various modifications are possible within the scope of the invention.

### Industrial Applicability

As described above, the interpretation system according to the present invention has an effect that it is possible to provide an interpretation system realized by a server apparatus and two or more terminal apparatuses, wherein the server apparatus properly manages information regarding languages of one or more interpreters, and thus this system is useful as an interpretation system and the like. The server apparatus according to the present invention has an effect that it is possible to display a screen containing a video obtained by capturing an image at a venue and two or more interpreter images, on terminals of the two or more interpreters, and thus this apparatus is useful as a server apparatus and the like.

## Claims

1. An interpretation system realized by a server apparatus and one or at least two terminal apparatuses,
wherein the server apparatus comprises:
an interpreter information group storage unit in which an interpreter information group, which is a group of one or more pieces of interpreter information, is stored, the information being information regarding an interpreter who interprets speech in a first language to a second language, and having a first language identifier for identifying the first language, a second language identifier for identifying the second language, and an interpreter identifier for identifying the interpreter;
a user information group storage unit in which a user information group, which is a group of one or more pieces of user information, is stored, the information being information regarding a user of each of the one or more terminal apparatuses, and having a user identifier for identifying the user and a second language identifier for identifying a language used by the user for listening or reading;
a second language speech acquiring unit that acquires one or more pieces of second language speech, which are data of speech obtained from speech in a first language spoken by one speaker, through interpretation performed by one or more interpreters respectively to second languages; and
a distributing unit that distributes, to each of the one or more terminal apparatuses, second language speech corresponding to the second language identifier contained in the user information corresponding to the terminal apparatus, out of the one or more pieces of second language speech acquired by the second language speech acquiring unit, using the user information group, and
the one or more terminal apparatuses each comprise:
a terminal receiving unit that receives second language speech distributed from the server apparatus; and
a reproducing unit that reproduces the second language speech received by the terminal receiving unit.

2. The interpretation system according to claim 1,
wherein the server apparatus further comprises a second language text acquiring unit that acquires one or more pieces of second language text, which are data of text respectively obtained through speech recognition of the one or more pieces of second language speech acquired by the second language speech acquiring unit,
the distributing unit distributes, to the one or more terminal apparatuses, the one or more pieces of second language text acquired by the second language text acquiring unit,
the terminal receiving units also receive the one or more pieces of second language text distributed from the server apparatus, and
the reproducing units also output the one or more pieces of second language text.

3. The interpretation system according to claim 1, wherein, when resuming reproduction of second language speech after an interruption, the reproducing unit performs chasing-reproduction of an un-reproduced portion in the second language speech, in fast-forward.

4. The interpretation system according to claim 3, wherein the reproducing unit performs chasing-reproduction of an un-reproduced portion in fast-forward at a speed corresponding to one or more of a delay time of the un-reproduced portion and a data size of the un-reproduced portion.

5. The interpretation system according to claim 3, wherein the reproducing unit starts chasing-reproduction of an un-reproduced portion in response to a data size of the un-reproduced portion exceeding a predetermined threshold or reaching the threshold.

6. The interpretation system according to claim 1,
wherein the server apparatus further comprises:
a first language text acquiring unit that acquires first language text, which is data of text obtained through speech recognition of speech in the first language spoken by one speaker; and
a translation result acquiring unit that acquires one or more translation results containing one or more pieces of data among translated text obtained through translation performed using a translation engine from the first language text to the second language and translation speech obtained through conversion from the translated text into speech,
the distributing unit further distributes, to each of the one or more terminal apparatuses, a translation result corresponding to the second language identifier contained in the user information corresponding to the terminal apparatus, out of the one or more translation results acquired by the translation result acquiring unit, using the user information group,
the terminal receiving unit also receives the translation result distributed from the server apparatus, and
the reproducing unit also outputs the translation result.

7. The interpretation system according to claim 6, wherein the translation result acquiring unit acquires only one or more translation results corresponding to one or more second language identifiers that are different from the one or more second language identifiers contained in the interpreter information group, and does not acquire one or more translation results corresponding to one or more second language identifiers that are the same as any of the one or more second language identifiers contained in the interpreter information group, among the two or more second language identifiers contained in the user information group.

8. The interpretation system according to claim 2,
wherein the one or more terminal apparatuses each further comprise a terminal accepting unit that can accept an operation that chooses one or more data formats out of speech and text, and
the reproducing unit outputs one or more pieces of data corresponding to the chosen one or more data formats, out of second language speech corresponding to the second language identifier contained in the user information regarding the user of the terminal apparatus and second language text obtained through speech recognition of the second language speech.

9. The interpretation system according to claim 8,
wherein the terminal receiving unit receives not only the second language text, but also second language text in a sub second language, which is another language, and
the reproducing unit outputs the second language text and the second language text in the sub second language received by the terminal receiving unit.

10. The interpretation system according to claim 1,
wherein one or more interpreter information groups and one or more user information groups are respectively stored in the interpreter information group storage unit and the user information group storage unit in association with a venue identifier for identifying a venue,
the user information further has a venue identifier, and
the second language speech acquiring unit and the distributing unit acquire and distribute one or more pieces of second language speech for each of two or more venue identifiers.

11. The interpretation system according to claim 1, wherein the server apparatus further comprises:
a first language speech acquiring unit that acquires first language speech, which is data of speech in the first language spoken by one speaker;
a speech feature value correspondence information acquiring unit that acquires speech feature value correspondence information indicating a correspondence between feature values of first language speech and second language speech, using the first language speech acquired by the first language speech acquiring unit and the one or more pieces of second language speech acquired by the second language speech acquiring unit, for each of one or more pieces of language information, which are each a pair of a first language identifier and a second language identifier; and
a learning module configuring unit that configures a learning module in which the first language speech is taken as input and the second language speech is taken as output, for each of the one or more pieces of language information, using the speech feature value correspondence information.

12. The interpretation system according to claim 11,
wherein the server apparatus further comprises a reaction acquiring unit that acquires reaction information, which is information regarding a reaction from the user to the second language speech reproduced by the reproducing unit, and
the learning module configuring unit configures a learning module, using speech feature value correspondence information acquired from two or more pairs of first language speech and second language speech selected using the reaction information.

13. The interpretation system according to claim 11, wherein the server apparatus further comprises:
a reaction acquiring unit that acquires reaction information, which is information regarding a reaction from the user to the second language speech reproduced by the reproducing unit; and
an evaluation acquiring unit that acquires, for each of one or more interpreters, evaluation information regarding an evaluation of the interpreter, using the reaction information corresponding to the interpreter.

14. A server apparatus comprising:
an interpreter information group storage unit in which an interpreter information group, which is a group of one or more pieces of interpreter information, is stored, the information being information regarding an interpreter who interprets speech in a first language to a second language, and having a first language identifier for identifying the first language, a second language identifier for identifying the second language, and an interpreter identifier for identifying the interpreter;
a user information group storage unit in which a user information group, which is a group of one or more pieces of user information, is stored, the information being information regarding a user of each of the one or more terminal apparatuses, and having a user identifier for identifying the user and a second language identifier for identifying a language used by the user for listening or reading;
a second language speech acquiring unit that acquires one or more pieces of second language speech, which are data of speech obtained from speech in a first language spoken by one speaker, through interpretation performed by one or more interpreters respectively to second languages; and
a distributing unit that distributes, to each of the one or more terminal apparatuses, second language speech corresponding to the second language identifier contained in the user information corresponding to the terminal apparatus, out of the one or more pieces of second language speech acquired by the second language speech acquiring unit, using the user information group.

15. The server apparatus according to claim 14,
wherein the interpreter information further has an interpreter image, which is an image of an interpreter, and
the server apparatus further comprises:
a video accepting unit that accepts a video obtained by capturing an image at a venue;
a screen information configuring unit that configures screen information for configuring a screen containing the video accepted by the video accepting unit and two or more interpreter images contained in the two or more pieces of interpreter information; and
a screen information transmitting unit that transmits the screen information configured by the screen information configuring unit to second terminal apparatuses of two or more interpreters.

16. The server apparatus according to claim 15, wherein the screen information configuring unit configures a screen containing two or more interpreter images with a clarity that is low enough to satisfy a predetermined condition.

17. The server apparatus according to claim 15,
wherein one or more pieces of interpreter information among the two or more pieces of interpreter information further have state information for specifying an interpreter who is currently performing interpretation or an interpreter who is not currently performing interpretation, and
the screen information configuring unit configures a screen containing the video accepted by the video accepting unit and the two or more interpreter images such that an interpreter image of an interpreter who is currently performing interpretation and an interpreter image of an interpreter who is not currently performing interpretation can be visually distinguished from each other, using the state information.

18. The server apparatus according to claim 17,
wherein the interpreter information has state information indicating any one of at least three states consisting of a state of being currently performing interpretation, a state of being ready to perform interpretation, and a state of not being ready to perform interpretation, and
the screen information configuring unit configures a screen containing the video accepted by the video accepting unit and the two or more interpreter images such that states of interpreters can be visually distinguished from each other, using the state information.

19. The server apparatus according to claim 15, further comprising: a chat receiving unit that receives chat information from a terminal apparatus or a second terminal apparatus,
wherein the screen information configuring unit configures screen information of a screen containing one or more of a first chat region for having a chat with the terminal apparatus of a user and a second chat region for having a chat with the second terminal apparatus of a staff member, the screen being a screen on which the chat information received by the chat receiving unit is displayed in the chat regions.

20. The server apparatus according to claim 19,
wherein the interpreter information has two or more language identifiers for identifying two or more interpretable languages, and
the screen information configuring unit configures screen information of a screen having two or more first chat regions, which are chat regions respectively corresponding to the two or more language identifiers.

21. The server apparatus according to claim 15, wherein the screen information configuring unit configures screen information such that an operation region, which is a region of one or more operable objects that accept an operation of an interpreter is positioned in a lower portion of the screen, and the video accepted by the video accepting unit is positioned in an upper portion of the screen.

22. The server apparatus according to claim 21, wherein the screen information configuring unit configures screen information such that two mute buttons for muting speech interpreted by an interpreter are respectively positioned on a lower left side of the screen and a lower right side of the screen.

23. The server apparatus according to claim 15,
wherein the interpreter information has volume information for specifying volumes set by an interpreter and respectively corresponding to two or more languages, in association with language identifiers, and
speech in a language identified by each of the language identifiers is output in a volume specified with the volume information that is paired with the language identifier, to the second terminal apparatus of the interpreter.

24. The server apparatus according to claim 15,
wherein the screen information configuring unit configures screen information having two or more types of user interface components corresponding to language identifiers, and
in a case in which an instruction to determine a language identifier is accepted from the second terminal apparatus for any of the two or more types of user interface components, the screen of the second terminal apparatus is changed such that a current language of all of the two or more types of user interface components is a language identified with the language identifier corresponding to the instruction.

25. The server apparatus according to claim 24, wherein the two or more types of user interface components are a user interface component for a volume operation and a user interface component for a display region of text for interpretation or of an interpretation result.

26. A distribution method realized using: an interpreter information group storage unit in which an interpreter information group, which is a group of one or more pieces of interpreter information, is stored, the information being information regarding an interpreter who interprets speech in a first language to a second language, and having a first language identifier for identifying the first language, a second language identifier for identifying the second language, and an interpreter identifier for identifying the interpreter; a user information group storage unit in which a user information group, which is a group of one or more pieces of user information, is stored, the information being information regarding a user of each of the one or at least two terminal apparatuses, and having a user identifier for identifying the user and a second language identifier for identifying a language used by the user for listening or reading; a second language speech acquiring unit; and a distributing unit, the method comprising:
a second language speech acquiring step of the second language speech acquiring unit acquiring one or more pieces of second language speech, which are data of speech obtained from speech in a first language spoken by one speaker, through interpretation performed by one or more interpreters respectively to second languages; and
a distributing step of the distributing unit distributing, to each of the one or more terminal apparatuses, second language speech corresponding to the second language identifier contained in the user information corresponding to the terminal apparatus, out of the one or more pieces of second language speech acquired by the second language speech acquiring unit, using the user information group.

27. A storage medium on which a program is stored, the program causing a computer capable of accessing: an interpreter information group storage unit in which an interpreter information group, which is a group of one or more pieces of interpreter information, is stored, the information being information regarding an interpreter who interprets speech in a first language to a second language, and having a first language identifier for identifying the first language, a second language identifier for identifying the second language, and an interpreter identifier for identifying the interpreter; and a user information group storage unit in which a user information group, which is a group of one or more pieces of user information, is stored, the information being information regarding a user of each of the one or at least two terminal apparatuses, and having a user identifier for identifying the user and a second language identifier for identifying a language used by the user for listening or reading, to function as:
a second language speech acquiring unit that acquires one or more pieces of second language speech, which are data of speech obtained from speech in a first language spoken by one speaker, through interpretation performed by one or more interpreters respectively to second languages; and
a distributing unit that distributes, to each of the one or more terminal apparatuses, second language speech corresponding to the second language identifier contained in the user information corresponding to the terminal apparatus, out of the one or more pieces of second language speech acquired by the second language speech acquiring unit, using the user information group.
